# NEUE EUROPÄISCHE PATENTSCHRIFT

(11) **EP 0 288 728 B2**
(45) Veröffentlichungstag und Bekanntmachung des Hinweises auf die Entscheidung über den Einspruch: **02.11.1995**
(45) Hinweis auf die Patenterteilung: 05.08.1992
(21) Anmeldenummer: 88104346.7
(22) Anmeldetag: 18.03.1988
(51) Int. Cl.: B29C 51/04, B29C 51/42, B29C 51/30

(54) **Verfahren und Vorrichtung zur Herstellung von Formteilen oder Gegenständen aus thermoverformbaren Kunststoffolien**
Method and apparatus for producing mouldings or articles from thermoformable plastic sheets
Procédé et dispositif de fabrication de pièces ou d'articles en des feuilles plastiques thermoformables

(30) Priorität: 30.04.1987 DE 3714365; 30.04.1987 DE 3714367
(43) Veröffentlichungstag der Anmeldung: 02.11.1988
(73) Patentinhaber: ALKOR GMBH KUNSTSTOFFE, D-81451 München (DE)
(72) Erfinder: Landler, Josef, D-8190 Wolfratshausen (DE)

(56) Entgegenhaltungen:
- DE-A- 1 479 801
- DE-A- 1 947 695
- DE-A- 1 963 573
- DE-A- 2 103 622
- DE-A- 2 517 032
- DE-A- 2 604 861
- DE-A- 2 711 706
- DE-A- 2 846 453
- US-A- 2 990 581
- US-A- 3 260 780
- US-A- 3 396 062
- US-A- 3 439 078
- Kunststoff Lexikon - Dr. K. Stoeckert 1981
- "Perspex" Acrylic Materials, Handbuch der Imperial Chemical Industries, 1975, second edition, Welwyn Garden City, England
- ICI Plastic Materials Guide, February 1966

## Beschreibung

Die vorliegende Erfindung betrifft ein Verfahren und eine Vorrichtung zur Herstellung von Formteilen oder Gegenständen aus thermoverformbaren Kunststoffolien, thermoverformbaren kunststoffhaltigen Bahnen oder Kunststoffplatten nach dem Negativtiefziehverfahren, wobei die Kunststoffolie, Kunststoffbahn oder Kunststoffplatte in mindestens einer Vorwärm- und/oder Aufheizstation vorgewärmt und/oder auf eine Temperatur innerhalb des thermoplastischen Bereiches aufgeheizt, über einen Spann- oder Abdichtungsrahmen der Tiefziehform gespannt, und durch einen Stempel oder eine ähnliche Vorrichtung verformt und in der Tiefziehform thermoverformt wird.

Gemäß der Erfindung wird ein Verfahren zur Herstellung von Formteilen oder Gegenständen für Kraftfahrzeuge und Flugzeuge verwendet, wobei bestimmte Verfahrensmaßnahmen, Temperaturunterschiede und dgl. eingehalten werden müssen.

Ein Negativtiefziehverfahren von Kunststoffplatten ist bereits bekannt (vgl. Kunststofflexikon, Carl Hanser Verlag, 1951, Dr. K. Stoeckhert, Seiten 550 - 552).

Dabei wird eine eingespannte Kunststoffplatte vorgewärmt oder aufgeheizt, das Werkzeug an die Platte angelegt, die Platte durch Einblasen von Luft von der Negativtiefziehform aus in entgegengesetzter Richtung vorgestreckt oder durch einen Stempel oder ähnliche Vorrichtung verformt und durch Evakuierung des Negativ-Werkzeuges und durch Druckluft unter einer Druckglocke tiefgezogen oder endverformt.

Dieses Verfahren ist verbesserungsbedürftig und beispielweise kaum zur Herstellung großer Teile mit genauer Oberflächenreproduktion oder zur Herstellung komplizierter bzw. mit Hinterschnitten versehenen Gegenständen, die zusätzlich möglichst spannungsarm sein sollten, geeignet.

Aus der US-A 3 396 062 ist ein Thermoverformungsverfahren für kleine thermoplastische Artikel (Hohlkörper), vorzugsweise Tassen, bekannt. Dabei muß die Schaumlaminatbahn zunächst einer bestimmten Temperaturführung unterworfen werden, wobei die Schaumbahn auf eine niedrigere Temperatur erhitzt wird als die kompakte Kunststoffolie. Es ist somit eine bestimmte Temperaturführung der Schaumlaminatbahn mit einer unterschiedlichen Temperatur der Oberschicht und Unterschicht erforderlich, die mittels Kontakterhitzung bzw. Druckerhitzung erfolgt. Das Verfahren gemäß der US-A-3396062 wird darüberhinaus unter Verwendung eines Preßstempels und mittels eines Überdruckes von 7 kg/cm² entsprechen ca. 6 atü (100 psi), d.h. unter Verwendung eines sehr erheblichen Druckes, der porösen Oberflächenfeinstrukturen einer Negativtiefziehform schädigen könnte, durchgeführt.

Aus der DE-A-1 963 573 ist eine Vorrichtung zum Tiefziehen von thermoplastisch verformbaren Folien bekannt, die aus einer Backenpresse mit einem Heiz- oder Plastifizierbacken und einem Formbacken besteht. Der Heizbacken enthält eine poröse Sintermetallplatte und eine satt eingefügte Heizplatte mit Heizelementen. Ebenso besteht die Form - platte aus einer gleichartig porösen Sintermetallplatte mit Kühlplatte. Es sind somit die Heizbacken beheizt und dienen zusammen mit der Formbacke zum Umpressen. Die Wärme wird über die Heizbacke zugeführt, ein Vorheizen der Kunststoffolie außerhalb der Backenpresse findet nicht statt, ebenso keine bestimmte Temperaturführung, Vorformung oder dergleichen.

Aus der US-A-2 990 581 ist weiterhin ein Vakuum-Thermoform-Tiefziehverfahren mit mechanischer Vorstreckung zur Herstellung von solchen Behältern bekannt, die Seitenwände und einen boden von gleichförmiger Dicke aufweisen.

Die eingespannte, durch Heizstrahlen erhitzte Folie wird einem biaxialen, vorziehenden Verfahren unterworfen durch Einführung eines Vorstreckstempels, wobei gleichzeitig die Teile gezogen werden, die den Boden des Hohlkörpers bilden.

Dabei sind sowohl die Formwände als auch der Stempel spitz bzw. steil zulaufend ausgebildet. Aufgrund der relativ hohen Behälterseitenwände bzw. Behälterwandflächen sind bestimmte Verhältnisse Seitenwand zum Durchmesser einzuhalten. Der Stempel muß bei diesem Verfahren auf Temperaturen von 154°C (310 °F) vorerhitzt werden. Die Tiefziehform wird dabei auf eine Temperatur von -6 bis +65 °C unter der Erweichungstemperatur des Harzes erwärmt, d.h. die Form kann sogar über die Erweichungstemperatur erhitzt werden.

Die vorgenannten beschriebenen Verfahren oder Vorrichtungen sind somit für größere, mit Feinstrukturierungen zu versehende Gegenstände oder mit Hinterschnitten versehene Formteile nicht vorteilhaft bzw. nicht geeignet.

Ziel und Aufgabe der vorliegenden Erfindung war es, an sich bekannte Tiefziehverfahren und Tiefziehvorrichtungen zu verbessern. Insbesondere sollte eine genaue Oberflächenreproduktion der gewünschten Oberflächenstrukturierung und/oder Oberflächendekorierungen auch mit Folien, Bahnen oder Kunststoffplatten ermöglicht werden. Weiterhin sollten spannungsarme Formteile mit Hilfe des Verfahrens und der Vorrichtung hergestellt werden können. Die verformten Kunststoffbahnen (einschließlich Platten, Folien und dgl. sollten auch noch hinsichtlich ihrer Narbung oder Oberflächenstrukturierung eine gute Temperaturbeständigkeit aufweisen. Das Verfahren sollte auch zur Herstellung von Formteilen für Kraftfahrzeuge oder Flugzeuge geeignet sein.

Erfindungsgemäß wurde festgestellt, daß diesen Zielen und Aufgaben ein Verfahren zur Herstellung von Formteilen oder Gegenständen aus thermoverformbaren Kunststoffolien, thermoverformbaren kunststoffhaltigen Bahnen oder Kunststoffplatten nach dem Negativtiefziehverfahren gerecht wird, wobei die Kunststoffolie, Kunststoffbahn oder Kunststoffplatte in mindestens einer Vorwärm- und/oder Aufheizstation vorgewärmt und/oder auf eine Temperatur innerhalb des thermoplastischen Bereiches aufgeheizt, über einen Spann- oder Abdichtungsrahmen der Tiefziehform gespannt, und durch einen Stempel oder ähnliche Vorrichtung vorgeformt und unter Verwendung einer Druckdifferenz in die kältere, poröse Tiefziehform gebracht und in dieser thermoverformt wird.

Gemäß der Erfindung wird das Verfahren zur Herstellung von Formteilen oder Gegenständen für Kraftfahrzeuge und Flugzeuge verwendet, wobei die aufgeheizten, eingespannten thermoverformbaren Kunststoffolien, Kunststoffbahnen oder Kunststoffplatten emissionsarm sind, einen Gesamtgehalt der bei der Verformungstemperatur und Verformungszeit flüchtigen Bestandteile kleiner 3 Gew.-% besitzen und eine Temperaturdifferenz von mehr als 100 °C gegenüber der kälteren Negativtiefziehform, die auf eine Temperatur von 18 bis 79 °C eingestellt wird, aufweisen und vorzugsweise durch Stützluft oder Stützgas gehalten, nachfolgend durch Druckunterschied zu der Negativtiefziehform hin gewölbt werden, wobei der für die Verformung verwendete Stempel in Teilbereichen dem herzustellenden Formteil oder Gegenstand im wesentlichen entspricht und eine Negativtiefziehform verwendet wird, die eine mikroporöse, luftdurchlässige Formoberfläche und eine mikrometallpartikelhaltige, keramik-metall- und/oder keramik-mikrometallpartikelhaltige und feinstteilige Füllstoffe enthaltende Schicht oder Oberfläche mit mikroskopisch feinen Strukturen und mit einer durchschnittlichen Metallschichtdicke oder Metallpartikeldicke unter 60 µm aufweist und neben Oberflächenfeinstrukturen zusätzliche Dekorstrukturen besitzt. Durch die Negativtiefziehform, die mit einem Kühlsystem oder mit einer Kühlmittelleitung versehen ist, werden die Folien, Platten oder Bahnen angesaugt sowie abgekühlt und unter Narbgebung und/oder Oberflächendekoration thermoverformt, wobei nachfolgend das durch Thermoverformen hergestellte Formteil oder der Gegenstand in der Negativtiefziehform unter Verwendung einer Temperaturdifferenz von mehr als 100 °C (bezogen auf die Temperatur der Kunststoffolie, -bahn oder -platte unmittelbar vor oder im Augenblick der Einbringung in die Negativtiefziehform) gekühlt oder schockgekühlt wird.

Nach einer anderen bevorzugten Ausführungsform wird die Kunststofffolie, Kunststoffbahn oder Kunststoffplatte im kalten oder im vorerwärmten Zustand zwischen dem geöffneten Stempel und der geöffneten Negativtiefziehform geführt, dort mittels verschiebbar angeordneter Heizvorrichtung, vorzugsweise Heizschienen, Heizgitter oder Heizstrahler, auf die Folien- oder Bahntemperatur und Plattentemperatur innerhalb des thermoplastischen Bereiches aufgeheizt, wobei gegebenenfalls die Kunststoffolie, Kunststoffbahn oder -platte durch Vorblasen, Stützluft oder Stützgas gehalten wird, die Heizvorrichtung aus dem Bereich der Negativtiefziehform und dem Stempel herausgefahren oder herausgeschwenkt, nachfolgend eine Verformung, vorzugsweise durch Erzeugung eines Druckunterschiedes durch Einführung von Druckluft von der Rückseite der Folie, Bahn oder Platte her (nicht zu narbende oder dekorierende Seite) oder vom Stempel her oder durch einen Unterdruck von der Negativtiefziehform bzw. der zu narbenden Seite her, und danach die Vorformung durch den Stempel durchgeführt wird und nachfolgend die endgültige Thermoverformung in der Negativtiefziehform durch Erhöhung des Druckunterschiedes, vorzugsweise durch Einführung von Preßgas oder Preßluft von der nicht zur Narbgebung oder Dekoration vorgesehenen Folien-, Bahnen- oder Plattenseite her und/oder durch Unterdruck (Vakuum) von der Seite der Negativtiefziehform her durchgeführt wird, wobei im Augenblick der Berührung der Kunststoffolie, Kunststoffbahn oder Kunststoffplatte mit der strukturierten Oberfläche oder Wandung des Negativtiefziehwerkzeuges die Kunststoffolie, Kunststoffbahn oder Kunststoffplatte diese Oberflächenstruktur (in Positivform) als Oberflächendekoration, Narbung oder Strukturierung annimmt und nachfolgend die thermoverformte Folie in der Negativtiefziehform abgekühlt wird.

Nach dem erfindungsgemäßen Verfahren wird die Kunststoffolie, Kunststoffbahn im Zustand hoher Temperaturwerte innerhalb des thermoplastischen Bereiches (oder auch etwas darüber bis 260 °C) bei Berühung der Oberfläche des Negativtiefziehwerkzeuges in die poröse, vorzugsweise mikroporöse und/oder mikroskopische Oberflächenfeinstrukturen sowie ggf. zusätzliche Dekorstrukturen aufweisende Negativtiefziehform hineingepreßt und/oder angesaugt, thermoverformt und nimmt dabei die dekorative Oberfläche eine Feinnahrbung und/oder Strukturierung an.

Gemäß einer bevorzugten Ausführungsform der Erfindung wird die Kunststoffolie₁ kunststoffhaltige Bahn oder Kunststoffplatte vor der Einbringung in die Negativtiefziehform auf eine Temperatur in der Nähe oder oberhalb des Schmelzbereiches, Schmelzpunktes bis 260 °C oder auf eine Temperatur innerhalb des thermoplastischen Bereiches (bis 260 °C) aufgeheizt und die Werkzeugtemperatur (Temperatur der Negativtiefziehform) auf 18 bis 79 °C, vorzugsweise 25 bis 76 °C, unter Kühlung oder Temperierung der Negativtiefziehform eingestellt.

Nach dem erfindungsgemäßen Verfahren wird die Kunststoffolie, kunststoffhaltige Bahn oder Kunststoffplatte unter Narbgebung und/oder Oberflächendekoration verformt und die Narbgebung und/oder Oberflächendekoration der Kunststoffolie, kunststoffhaltigen Bahn oder Kunststoffplatte erfolgt durch eine poröse, luftdurchlässige, vorzugsweise mikroporöse luftdurchlässige Formoberfläche und/oder Aufrauhung im Bereich bis zu einer durchschnittlichen Größe, Höhe oder Breite bis zu 300 µm, vorzugsweise bis zu 100 µm, aufweisende Negativtiefziehform, wobei die Formoberfläche der Negativtiefziehform aus einem gehärteten Bindemittel und mindestens einem Füllstoff, vorzugsweise Füllstoffgemisch, besteht und mit mindestens einer ebenfalls porösen oder mikroporösen luftdurchlässigen Unterschicht der Negativtiefziehform verbunden ist.

Nach einer bevorzugten Ausführungsform werden dünne Folien mit einer Dicke von 100 bis 1400 µm, vorzugsweise 200 bis 1000 µm, und/oder einer Shore-D-Härte von 20 bis 60, vorzugsweise 25 bis 40, unter Narb- und/oder Dekorgebung im Negativtiefziehverfahren verformt oder Folien mit diesen Eigenschaften für das erfindungsgemäße Verfahren eingesetzt.

Gemäß der Erfindung wird die Kunststoffbahn im Negativtiefziehverfahren unter Narbgebung und/oder Oberflächendekoration verformt.

Die Narbgebung und/oder Oberflächendekoration der Kunststoffbahn erfolgt durch eine poröse, luftdurchlässige, vorzugsweise mikroporöse luftdurchlässige Formoberfläche aufweisende Negativtiefziehform, die eine metall-, metallegierungs-, mikrometallpartikelhaltige, keramikmetall- und/oder keramikmikrometallpartikelhaltige und/oder feinstteilige Füllstoffe enthaltende Schicht oder Oberfläche mit mikroskopisch feiner Struktur und mit einer durchschnittlichen Metallschichtdicke, Füllstoffpartikeldicke oder Metallpartikeldicke unter 60 µm, aufweist, wobei zwischen der Werkzeugtemperatur und der Kunststoffolie, kunststoffhaltigen Bahn oder Kunststoffplatte, ein Temperaturunterschied von mehr als 100 °C eingehalten wird.

Nach einer anderen bevorzugten Ausführungsform werden die Kunststoffolien mit einem wärmestabilen schäumbaren Kunststoff oder Schaum, vorzugsweise Polyolefinschaum, mit einer Schaumschichtdicke von 0,5 bis 10 mm, vorzugsweise 1,5 bis 5 mm, laminiert oder versehen, bevor sie der Negativtiefziehform dreidimensional verformt und die Folienoberfläche genarbt und/oder oberflächenstrukturiert wird, wobei gegebenenfalls die Schaumschicht mit einem Träger oder einer Trägerschicht hinterlegt und der Träger vorzugsweise vorgeformt, lagegenau ausgerichtet und mit dem Schaum und/oder der verformten Kunststoffolienbahn verbunden wird.

Nach einer anderen bevorzugten Ausführungsform wird die Kunststoffolie nach der dreidimensionalen Verformung, Narbung und/oder Oberflächenstrukturierung in dem Werkzeug nach oder während der Abkühlung entweder in der Form selbst oder in einem getrennten Arbeitsgang und/oder in einer anderen Form mit einem weichen bis mittelharten Schaum, vorzugsweise Polyurethanschaum, hinterschäumt, wobei gegebenenfalls bei der Hinterschäumung zusätzlich ein Träger oder eine Trägerschicht eingelegt wird.

Gemäß einer bevorzugten Ausführungsform der Erfindung wird die gegebenenfalls eingespannte oder vorgespannte Kunststoffbahn unter Mitverwendung eines Druckunterschiedes und unter Erwärmung in die Negativtiefziehform eingebracht und in der Negativtiefziehform verformt, wobei die in die Negativtiefziehform eingebrachte Kunststoffbahn durch die strukturierte, poröse und luftdurchlässige Oberfläche des Negativtiefziehwerkzeuges in der Oberfläche bzw. auf der Oberflächenschicht während der Thermoverformung strukturiert und/oder genarbt und nachfolgend oder gleichzeitig von der (nicht mit der Negativtiefziehform in Kontakt oder Verbindung stehenden) Rückseite der Kunststoffbahn her ein Behandlungsmittel auf die Kunststoffbahn aufgebracht wird.

Nach einer bevorzugten Ausführungsform des erfindungsgemäßen Verfahrens ist das Behandlungsmittel eine Kühlflüssigkeit oder ein kaltes Gas, das die in der Negativtiefziehform befindliche Kunststoffbahn auf die Entformungstemperatur oder in die Nähe der Entformungstemperatur abkühlt oder schockkühlt. Dadurch gelingt es, die erzielten Narben und Strukturen auch im Mikrobereich zu erzielen und unter anderem auch verformte Gegenstände oder Formteile mit verbesserten Eigenschaften zu erhalten.

Nach einer weiteren Ausführungsform wird als Behandlungsmittel ein Haftvermittler, vorzugsweise eine Haftvermittlerflüssigkeit oder eine einen Haftvermittler enthaltende Flüssigkeit, ein Klebstoff, eine im Sprühverfahren aufzubringende Kunststoffschicht und/oder eine Sperrschicht, vorzugsweise eine als Flüssigkeit oder als Flüssigkeitsgemisch aufzubringende Sperrschicht, verwendet. Als Sperrschicht werden bevorzugt kunststoffhaltige Flüssigkeiten eingesetzt, vorzugsweise Flüssigkeiten mit mindestens einem Polyacryl-, Polymethacrylsäureester, unvernetztem oder vernetztem Polyurethan, Vinylchloridhomo-, -copolymerisat, -pfropfpolymerisat, vorzugsweise Vinylchloridcopolymerisat mit Polyvinylacetat oder Polyvinylbutyral, Vinylidenhalogenidhomo- oder -copolymerisat, vorzugsweise Vinylidenchlorid oder Polyvinylidenfluorid, Olefincopolymerisat, Polyamid, kautschukartigen Terpolymerisat aus Ethylen, Propylen und einem Dien (EPDM), kautschukartigen Ethylen-Propylen-Mischpolymerisat (EPM), chloriertem Polyethylen, Polyacrylnitril oder aus einem Fluorpolymeren, vorzugsweise Polytetrafluorethylen, mindestens einem Lösungs- und/oder Verdünnungsmittel und/oder Emulgator und/oder Netzmittel und/oder Weichmacher, sowie gegebenenfalls Zusatz- und/oder Verarbeitungshilfsmittel.

Die Sperrschicht verhindert u.a., daß ungünstige Wechselwirkungen zwischen den Bestandteilen des Schaumes oder der Hinterschäumung (z.B. Polyurethanschaum) und der Kunststoffbahn auftreten.

Die Sperrschicht wird in einer Dicke von 1 bis 400 µm, vorzugsweise 5 bis 350 µm, aufgetragen. Dabei wird die Sperrschicht in Form einer Verdünnungsmittel enthaltenden Dispersion oder Lösung aufgetragen, die vorzugsweise organisch-chemische kunststofflösende oder -anquellende Lösungsmittel und/oder Weichmacher und/oder Wasser als Verdünnungsmittel enthält oder daraus entsteht. Nach einer bevorzugten Ausführungsform werden auch diese Flüssigkeiten (Haftvermittler für Klebschicht und/oder für Sperrschicht) mit zur Abkühlung der in der Negativtiefziehform befindlichen verformten Kunststoffbahn benutzt.

Als Haftvermittler werden die an sich für die jeweils eingesetzten Kunststoffe bekannten Haftvermittler verwendet, vorzugsweise Ethylen-Vinylacetat-Copolymerisat, Ethylen-Vinylacetat-Kohlenmonoxid-Terpolvmerisat, Ethylen-Acrylsäureester-Copolymerisat, wobei auch in diesen Fällen Lösungen, Dispersionen oder ähnliche Flüssigkeiten zum Aufbringen der Haftvermittler eingesetzt werden, die gegebenenfalls Lösungs- oder Verdünnungsmittel, Weichmacher und andere Zusatzmittel enthalten.

Das flüssige Behandlungsmittel wird auf die Rückseite der in der Negativtiefziehform befindlichen thermoverformten Kunststoffbahnen unter Sprühen, Fluten und/oder Spritzen oder ähnlichen Aufbringverfahren von Flüssigkeiten aufgebracht. Das nicht von der Kunststoffbahn aufgenommene Behandlungsmittel wird aufgefangen und weiterverwendet, vorzugsweise im Kreislauf geführt. Dadurch gelingt es, das Behandlungsmittel ohne Verluste oder ohne wesentliche Verluste aufzubringen.

Gemäß der Erfindung wird die Kunststoffbahn unter Narbgebung und/oder Oberflächendekoration verformt. Die Narbgebung der Kunststoffbahn erfolgt durch eine poröse, luftdurchlässige, vorzugsweise mikroporöse, luftdurchlässige Formoberfläche und/oder durch eine mikroskopisch feine Strukturen aufweisende Negativtiefziehform, während die Kunststoffbahn oder zumindestens die der Negativtiefziehform zugewandte Oberflächenschicht der Kunststoffbahn sich mindestens im thermoplastischen Temperaturbereich oder darüber (bis 260 °C) befindet, wobei zwischen der Werkzeugtemperatur und der Kunststoffbahn ein Temperaturunterschied von mehr als 30 °C, vorzugsweise mehr als 80 °C, eingehalten wird, so daß die Negativtiefziehform kälter als die zu verformende Bahn ist.

Gleichzeitig oder nachfolgend wird die gegenüber der Temperatur der Kunststoffbahn kalte oder kältere Behandlungsflüssigkeit auf die Rückseite der in der Negativtiefziehform befindlichen thermoverformten Kunststoffbahn aufgebracht, so daß eine merkliche Abkühlung erfolgt, die je nach Art, Menge des Behandlungsmittels, Temperaturhöhe der Kunststoffbahn bei der Verformung und dgl. zur Entformungstemperatur oder in die Nähe der Verformungstemperatur oder so erfolgen kann, daß eine zusätzliche Kühlung oder Abkühlung, z.B. mit einer Kühlflüssigkeit, einer Kühlvorrichtung und dergleichen nicht mehr oder nur in einem begrenzten Umfang erforderlich wird.

Die Temperatur der Behandlungsflüssigkeit liegt dabei zwischen 5 und 120 °C, vorzugsweise 15 bis 75 °C, und es wird ein Temperaturunterschied zwischen der erhitzten Kunststoffbahn und der Behandlungsflüssigkeit von mehr als 30 °C, vorzugsweise mehr als 60 °C, eingehalten.

Nach einer bevorzugten Ausführungsform wird die Kunststoffbahn auf eine Tempertur innerhalb des thermoplastischen Bereiches oder etwas über der Temperatur des thermoplastischen Bereiches (maximal bis 260 °C) aufgeheizt oder die in diesem Temperaturbereich befindliche Kunststoffbahn verwendet und in einer sonst für das "Slush-Moulding-Verfahren" benutzten Tiefziehform im Negativtiefziehverfahren unter Einhaltung eines Temperaturunterschiedes zwischen dem Werkzeug und der Kunststoffbahn von vorzugsweise mehr als 100 °C tiefgezogen und mit dem Behandlungsmittel behandelt, während der verformte Gegenstand noch in der Form ist.

Gemäß der Erfindung werden im Negativtiefziehverfahren Kunststoffolien, kunststoffhaltige Bahnen oder Kunststoffplatten verformt, die aus Kunststoff, einer Kunststoffmischung oder Kunststofflegierung und bezogen auf 100 Gew.-Teile Kunststoff, Kunststoffmischung oder Kunststofflegierung 0,01 bis 15 Gew.-Teile, vorzugsweise 0,1 bis 6 Gew.-Teile, Verarbeitungshilfsmittel, Stabilisierungsmittel sowie gegebenenfalls zusätzlich Füllstoffe, Farbpigmente, Farbstoffe, Weichmacher, Stabilisatoren oder anderen Zusatzstoffen und/oder Weichmachern bestehen oder diese enthalten. Bevorzugt werden im Negativtiefziehverfahren gemäß der Erfindung emissionsarme Kunststoffolien, kunststoffhaltige Bahnen oder Kunststoffplatten verformt, wobei der Gesamtgehalt der bei der Verformungstemperatur und Verformungszeit flüchtigen Bestandteile kleiner als 3 Gew.-%, vorzugsweise kleiner als 2 Gew.-% ist.

Nach einer bevorzugten Ausführungsform besteht der Kunststoff, die Kunststoffmischung oder Kunststofflegierung der emissionsarmen Kunststoffolien, kunststoffhaltigen Bahnen oder Kunststoffplatten aus Vinylchloridhomo- oder -copolymerisat, vorzugsweise in Kombination mit einem plastifizierenden und/oder elastomermodifizierten Thermoplasten, aus einem Olefinhomo- und/oder -copolymerisat, chlorierten Polyethylen, Ethylen-Propylen-Copolymerisat (EPM), Ethylen-Propylen-Dien-Polymerisat (EPDM), thermoplastischen Polyester, thermoplastischen Polyurethan, kautschukartige Polyesterurethan und/oder Polyvinylidenfluorid, oder enthält einen dieser Kunststoffe als Bestandteil.

Der Kunststoff, die Kunststoffmischung oder die Kunststofflegierung besteht dabei nach bevorzugten Ausführungsformen aus Vinylchloridhomo- oder -copolymerisat und einem Modifiziermittel auf der Basis eines Polymeren mit einer Glasumwandlungstemperatur von größer als 70 °C, vorzugsweise größer als 80 °C, und/oder einem Modifiziermittel mit einer Glasumwandlungstemperatur von kleiner als 60 °C, vorzugsweise kleiner als 50 °C. Nach einer bevorzugten Ausführungsform enthält das Vinylchloridhomo-, -co- oder -pfropfpolymerisat als plastifizierenden und/oder Elastomer modifizierten Thermoplasten, Ethylen-Vinylacetat-Copolymerisat, vorzugsweise mit einem Acetatgehalt von größer als 60 Gew.-%, Ethylenvinylacetat-Kohlenmonoxid-Terpolymerisat (Elvaloy), einen thermoplastischen Kautschuk, vorzugsweise Ethylen-Propylen-Copolymerisat (EPM) und/oder Ethylen-Propylen-Dien-Terpolymerisat (EPDM), einen Kautschuk auf der Basis von Styrolpolymerisat oder Styrolblockpolymerisaten, chloriertem Polyethylen, ein thermoplastisches Polyurethan, ein thermoplastisches Polyesterharz, Olefinelastomer, Acrylat- und/oder Methacrylathomoco- und -pfropfpolymerisate, Nitrilkautschuk, Methylbutadien-Styrolpolymerisat (MBS) sowie gegebenenfalls anderen Modifizierungsmitteln, vorzugsweise Styrol-Acrylnitril-Copolymerisate (SAN), Acrylnitril-Butadienharz (NBA), Acrylnitril-Butadien-Copolymerisat (ABS), ASA, AEN, ABS + MABS (Butadien-Styrol-Maleinsäure-Terpolymerisat), Mischungen mit Adipatcarbonmischestern und/oder aliphatische oder aromatische Carbonsäureester, vorzugsweise Trimellithsäureester, Adipate.

Gemäß einer bevorzugten Ausührungsform werden tiefziehfähige, ungeschäumte Mono- oder Verbundfolien mit einer Dicke von 100 bis 1400 µm, vorzugsweise 200 bis 1000 µm, eingesetzt. Sie bestehen aus einer oder mehreren weichmacherfreien oder weichmacherarmen Schicht bzw. Schichten aus einer Mischung bzw. Legierung von Polyvinylchlorid (PVC) oder Vinylchlorid-Copolymerisat` Acrylnitril-Butadien-Copolymerisat (ABS) und/oder einem Plastifiziermittel oder Modifizierungsmittel, vorzugsweise auf der Basis eines plastifizierenden Hochpolymeren mit polaren Gruppen, das ein Molekulargewicht von größer als 10.000, vorzugsweise größer als 30.000, aufweist und mit Polyvinylchlorid eine Phase bildet oder mit Polyvinylchlorid verträglich ist oder Mischungen oder Legierungen von Polyvinylchlorid (PVC) oder Vinylchlorid-Copolymerisat und Acrylnitril-Butadien-Copolymerisat (ABS) mit einem PVC-ABS-Gehalt von mehr als 40 Gew.-%, vorzugsweise mehr als 50 Gew.-% (bezogen auf 100 Gew.-Teile der Kunstharzmischung) mit einem anderen Kunstharz, vorzugsweise eine Acrylnitril-Copolymerisat oder einem Kunstharzgemisch auf der Basis von Acrylnitril-Copolymerisat, sowie einem Plastifizierungsmittel auf der Basis eines plastifizierenden Hochpolymeren mit polaren Gruppen, das ein Molekulargewicht von größer als 10.000, vorzugsweise größer als 30.000, aufweist und mit Polyvinylchlorid eine Phase bildet oder mit Polyvinylchlorid verträglich ist.

Nach einer Ausführungsform wird die vorgenannte Folie als Unterfolie verwendet und zusätzlich eine weichmacherarme Oberfolie mit einer bestimmten Zusammensetzung. Die Oberfolie besitzt nach einer bevorzugten Ausführungsform eine Dicke von 100 bis 500 µm, vorzugsweise 120 bis 200 µm, und besteht aus Polyvinylchlorid sowie einem Plastifizierungsmittel auf der Basis eines plastifizierenden Hochpolymeren mit polaren Gruppen, das ein Molekulargewicht von größer als 10.000, vorzugsweise größer als 30.000, aufweist und mit Polyvinylchlorid eine Phase bildet oder mit Polyvinylchlorid verträglich ist oder aus Mischungen von Polyvinylchlorid oder Vinylchlorid-Copolymerisat mit einem anderen Kunstharz, vorzugsweise einem Acrylnitril-Copolymerisat oder einem Kunstharzgemisch auf der Basis von Acrylnitril-Copolymerisat und/oder einem Plastifiziermittel oder Modifiziermittel auf der Basis eines plastifizierenden Hochpolymeren mit polaren Gruppen, das ein Molekulargewicht von größer als 10.000, vorzugsweise größer als 30.000, aufweist und mit Polyvinylchlorid eine Phase bildet oder mit Polyvinylchlorid verträglich ist. Die Oberfolie kann auch als Unterfolie oder als Monofolie Verwendung finden.

Als Polyvinlchlorid für die Kunststoffbahn (Monofolie, Laminate oder coextrudierte Folien aus Unter- und Oberfolie) werden Vinylchloridhomopolymerisate eingesetzt. Es können jedoch auch Vinylchlorid-Copolymerisate, die durch Polymerisation mit bis zu 40 Gew.-%, vorzugsweise bis zu 10 Gew.-%, (bezogen auf 100 Gew.-% Vinylchlorid-Copolymerisat) anderer olefinisch ungesättigter Monomere hergestellt werden, Verwendung finden.

Als Vinylchloridpolymerisate werden bevorzugt Suspensions- und Blockpolymerisate eingesetzt. Es können jedoch auch Emulsionspolymerisate Verwendung finden. Als Polyolefine für die Folie können Polyethylen, Polypropylen sowie Copolymere von Ethylen und Propylen oder Legierungen von einem oder mehreren dieser Bestandteile eingesetzt werden.

Nach einer bevorzugten Ausführungsform besteht das Acrylnitril-Copolymerisat, das für die Kunststoffbahn eingesetzt wird, aus Styrol-Acrylnitril-Copolymerisat (SAN) und/oder Acrylnitril-Butadienharz (NBR).

Das Plastifiziermittel für die Kunststoffbahn bzw. Kunststoffmischung für die Kunststoffbahn besteht aus einem plastifizierenden Hochpolymeren mit polaren Gruppen, das mit dem Polyvinylchlorid einen Glaspunkt bildet, der zwischen dem Glaspunkt des PVC und dem Glaspunkt des Plastifiziermittels liegt.

Nach einer Ausführungsform besteht das Acrylnitril-Copolymerisat der Oberfolie aus Acrylnitril-Butadien-Copolymerisat (ABS) und/oder Styrol-Acrylnitril-Copolymerisat (SAN) und/oder Acrylnitril-Butadienharz (NBR).

Nach einer bevorzugten Ausführungsform beträgt der PVC-Gehalt der Oberfolie (bezogen auf die Kunstharzmischung bzw. -legierung, ohne Füllstoffe und Verarbeitungshilfsmittel) mehr als 50 Gew.-%, vorzugsweise mehr als 60 Gew.-%.

Der Gehalt des polare Gruppen aufweisenden Plastifiziermittels oder Plastifiziermittelgemisches in der Kunststoffbahn (Oberfolie und/oder Unterfolie) beträgt 5 bis 30 Gew.-%, vorzugsweise 7 bis 23 Gew.-%, (bezogen auf die Kunstharzmischung der Kunststoffbahn bzw. -folie gerechnet ohne Verarbeitungshilfsmittel, Zusatzstoffe, Füllmittel und dergleichen).

Nach einer zweckmäßigen Ausführungsform besteht das Plastifiziermittel aus einem Ethylen-Vinylacetat-Copolymerisat (EVA) mit polaren Gruppen und einem Vinylacetatgehalt von 60 bis 80 Gew.-%, vorzugsweise 65 bis 70 Gew.-%.

Nach einer anderen bevorzugten Ausführungsform besteht das Plastifiziermittel aus einem olefinischen Terpolymerisat mit statistisch verteilten Acetat- und Kohlenmonoxidgruppen (Ethylen-Vinylacetat-Kohlenmonoxid-Terpolymerisat). Es weist ein Molekulargewicht größer als 200.000 und eine Zusammensetzung von 50 bis 79 Gew.-%, vorzugsweise 57 bis 72 Gew.-%, Ethylen, 35 bis 15 Gew.-%, vorzugsweise 29 bis 19 Gew.-%, Vinylacetat und 15 bis 6 Gew.-%, vorzugsweise 14 bis 9 Gew.-%, Kohlenmonoxid auf.

Nach einer anderen zweckmäßigen Ausführungsform wird als Plastifiziermittel ein Polycaprolacton (PCL) mit polaren Gruppen verwendet.

Weiterhin werden bevorzugt in der Kunststoffmischung aliphatische und/oder aromatische Polycarbonsäuren eingesetzt.

Die Kunststoffbahnen (Ober- und/oder Unterfolie oder Monofolie) enthalten cadmiumfreie Stabilisatoren, vorzugsweise Zinnstabilisatoren. Die Mischungen werden vorzugsweise unter Zusatz von Stabilisatoren, Antioxidation, Verarbeitungshilfsmitteln usw. hergestellt.

Nach einer bevorzugten Ausführungsform besteht bzw. bestehen die Unterfolie bzw. Unterfolien aus 20 bis 50 Gew.-%, vorzugsweise 25 bis 37 Gew.-%, Polyvinylchlorid und 60 bis 20 Gew.-%, vorzugsweise 37 bis 25 Gew.-%, Acrylnitril-Butadien-Copolymerisat (ABS), (bezogen auf die Kunstharzmischung bzw. -legierung ohne Verarbeitungshilfsmittel und Füllstoffe) sowie Restbestandteilen aus einem Plastifiziermittel oder Plastifiziermittelgemisch und Styrol-Acrylnitril-Copolymerisat (SAN) und/oder Acrylnitril-Butadienharz (NBA) und enthalten je 100 Gew.-Teile des Kunstharzgemisches zusätzlich 0,5 bis 12 Gew.-Teile, vorzugsweise 1 bis 7 Gew.-Teile, eines oder mehrerer Verarbeitungshilfsmittel sowie 0 bis 40 Gew. -Teile, vorzugsweise 0,5 bis 20 Gew.-Teile, eines Füllstoffes oder Füllstoffgemisches und/oder eines Mittels zum Schwerentflammbarmachen. Diese Rezeptur ist auch für Monofolien geeignet. Die Oberfolien enthalten bevorzugt 10 bis 35 Gew.-%, vorzugsweise 18 bis 30 Gew.-%, eines Plastifiziermittels oder Plastifiziermittelgemisches oder Modifiziermittels (bezogen auf die Kunstharzmischung bzw. -legierung ohne Verarbeitungshilfsmittel und Füllstoffe), sowie je 100 Gew.-Teile des Kunstharzgemisches 0,5 bis 12 Gew.-Teile, vorzugsweise 1 bis 7 Gew.-Teile, eines oder mehrerer Verarbeitungshilfsmittel. Gegebenenfalls können nach einer Ausführungsform je 100 Gew.-Teile der Kunststoffmischung 0 bis 40 Gew. -Teile, vorzugsweise 0,5 bis 20 Gew.-Teile, eines Füllstoffes oder Füllstoffgemisches und/oder eines Mittels zum Schwerentflammbarmachen zugefügt werden. Diese Mischung ist auch für Kunststoffbahnen oder Monofolien geeignet.

Die Kunststoffbahn oder die aus Unterfolie und Oberfolie bestehende Kunststoffolie ist nach einer Ausführungsform mit einer Lackschicht oder Kunststoffbeschichtung, vorzugsweise auf der Basis von Acrylatharzen, Polyvinylchlorid-Acrylatharzen, Polyurethanharzen und/oder Epoxidharzen, überzogen.

Nach dem erfindungsgemäßen Verfahren und der erfindungsgemäßen Vorrichtung werden bevorzugt Formkörper oder Formkörperteile für Kraftfahrzeuginnenräume, Armaturenbretter von Kraftfahrzeugen sowie Sicherheitsabdeckungen, Seitenwände, Vorder- und Rückwandteile, Schalttafeln sowie Seitenpfosten und deren Sicherheitsabdeckungen für Kraftfahrzeuge und Flugzeuge hergestellt.

Zum Ausschäumen werden die an sich bekannten schäumbaren Kunststoffe, z.B. Polyurethanschaum, Polyolefinschaum und dgl. verwendet, denen je nach Art und Zusammensetzung der Kunststoffe bei der Herstellung Treibmittel, Mittel zum Schwerentflammbarmachen, Hilfs- und Zusatzstoffe vor dem Verschäumen zugesetzt werden.

Die Dicke des Schaumes richtet sich nach dem vorgesehenen Einsatzzweck und der äußeren Form des Formteiles.

Gemäß dem erfindungsgemäßen Verfahren wird über die Oberfläche des herzustellenden Formteiles, Gegenstandes oder Urmodels des herzustellenden Formteiles oder Gegenstandes oder einer gleichmäßig oder annähernd gleichmäßig über dessen Oberfläche angeordneten Schicht oder Folie, eine Formausfüllung, Schicht oder Ausguß, bestehend aus oder enthaltend einen Kunststoff, vorzugsweise auf der Basis von Silikonpolymeren, Silikonkautschuk oder anderen kunststoffbindemittelhaltigen oder anorganische Bindemittel enthaltende Materialien, aufgebracht, die nach dem Aushärten entstandene (positive) Form (Matrize) abgetrennt oder abgezogen wird und mit einer metall-, metallegierungs-, mikrometallegierungs-, mikrometallpartikelhaltigen oder metallhaltige Partikel enthaltenden Schicht oder Oberfläche mit einer durchschnittlichen Metallschichtdicke oder Metallpartikeldicke unter 80 µm, vorzugsweise unter 60 µm, versehen und mit einem Kunststoff, kunststoffhaltigen oder bindemittelhaltigen Material unter Bildung luftdurchlässiger Strukturen oder Kanälen ausgegossen, ausgefüllt oder ausgespritzt, wobei die Oberfläche der Negativtiefziehform mikroporös, vorzugsweise mikroporös und luftdurchlässig, ist. Die so erhaltene Negativtiefziehform versieht man mit mindestens einer Vorrichtung zur Anlegung eines Vakuums oder Unterdruckes sowie gegebenenfalls Temperiersystem, vorzugsweise Kühlsystem oder Kühlmittelleitung. Danach wird die Kunststoffolie, kunststoffhaltige Bahn oder Kunststoffplatte in der Negativtiefziehform tiefgezogen, wobei die Kunststoffolie, kunststoffhaltige Bahn oder Kunststoffplatte unter Mitverwendung eines Stempels oder einer ähnlichen Vorrichtung vorgeformt.

Bereits bei dem Vorstrecken oder Vorformen der Kunststoffolie, -bahn -platte wird durch den Stempel eine Form hergestellt, die ganz oder in Teilbereichen dem herzustellenden Formteil oder Gegenstand im wesentlichen entspricht. Bei dem Vorstrecken oder Vorformen werden Temperatur- und/oder Druckunterschiede zwischen der Kunststoffolie, der kunststoffhaltigen Bahn oder der Kunststoffplatte und dem Werkzeug und/oder dem Stempel oder der Negativtiefziehform eingestellt.

Die Kunststoffolie oder Kunststoffolienbahn oder Platte wird nach einer Ausführungsform vom Extruder oder einer ähnlichen Plastifiziervorrichtung kommend unter Ausnutzung der bereits vorhandenen Wärmekapazität und gegebenenfalls durch zusätzliche Erwärmung auf die Temperatur im thermoplastischen Bereich gebracht oder gehalten oder die Kunststoffolie oder Kunststoffplatte wird auf eine Temperatur im thermoplastischen Bereich vor Einbringung in die Negativtiefziehformvorrichtung vorerwärmt.

Die Entformung erfolgt bevorzugt durch oder unter Mitverwendung eines Blas- oder Gasdrucks, wodurch eine Erleichterung der Entformung, insbesondere in kritischen Bereichen (z.B. Hinterschneidungen) ermöglich wird.

Als Kunststoffolie wird nach einer Ausführungsform ein Kunststoffolienlaminat eingesetzt, bei dem eine Schicht mit einem Treibmittel oder Treibmittelgemisch versehen ist, das bei dem Aufheizvorgang, bei dem Umformvorgang und/oder Narbgebungsvorgang aufschäumt oder aufzuschäumen beginnt, wobei die gebildete geschäumte Schicht als Dekor- und/oder Narbgebungsschicht oder als Polsterschicht auf der Rückseite der strukturierten und/oder genarbten Folie dient.

Nach einer anderen Ausführungsform des Verfahrens werden Negativtiefziehformen eingesetzt, die sonst für da Slush-Moulding-Verfahren verwendet werden. Gemäß dem erfindungsgemäßen Verfahren wird eine genaue Wiedergabe oder Reproduktion von form- und temperaturstabilen Oberflächenstrukturierungen von Modellen durch die Warmverformung bei Folien erzielt.

Die Erfindung betrifft auch eine Vorrichtung Herstellung von Formteilen oder Gegenständen aus thermoverformbaren Kunststoffolien, thermoverformbaren kunststoffhaltigen Bahnen oder Kunststoffplatten nach dem Negativtiefziehverfahren, bestehend aus einer porösen Tiefziehform, der als Gegenwerkzeug ein Stempel oder eine ähnliche Vorrichtung zugeordnet ist, wobei die Negativtiefziehform mit mindestens einer Zuleitung und/oder Vorrichtung zur Ausübung eines Druckunterschiedes versehen ist und die Negativtiefziehvorrichtung mit einem Spann- oder Abdichtungsrahmen zum Einspannen der thermoverformbaren Kunststoffolien, thermoverformbaren kunststoffhaltigen Bahnen oder Kunststoffplatten und einem Kühlsystem oder Kühlmittelleitung ausgestattet ist, die Negativtiefziehform die Form eines Kraftfahrzeugformteiles, Flugzeugformteiles, Kraftfahrzeug- oder Flugzeugteiles oder -gegenstandes in Negativform aufweist, das die mikroporöse Formoberfläche luftdurchlässig ist, Oberflächenfeinstrukturen zur Narbgebung sowie gegebenenfalls Dekorstrukturen aufweist und eine metallegierungs-, mikrometallpartikelhaltige, keramik-metall- und/oder keramikmikrometallpartikelhaltige und/oder feinstteilige Füllstoffe enthaltende Schicht oder Oberfläche mit einer durchschnittlichen Partikeldicke unter 60 µm besitzt, daß der Stempel oder die ähnliche Vorrichtung die Form oder Formteilbereiche der Negativtiefziehform (in Positivform) aufweist, und die Negativtiefziehform in Kombination mit einer Zuleitungsvorrichtung und/oder Abzugsvorrichtung für die Kunststoffolie, -bahn oder -platte oder Transportvorrichtung für das hergestellte verformte Formteil oder den Gegenstand steht.

Die Negativtiefziehform enthält mindestens eine Oberflächenschicht als Formoberfläche, die aus einem Bindemittel, einem nicht wärmeleitenden oder schlecht wärmeleitenden, anorganisch-chemischen feinteiligen Füllstoff, vorzugsweise Keramikpulver, mit einer mittleren Teilchengröße unter 80 µm, vorzugsweise unter 50 µm, sowie einem feinteiligen metall-, metallegierungs-, mikrometallpartikelhaltigen, keramikmetallpartikelhaltigen, feinteiligen Pulver oder pulverförmigen Gemisch mit einer durchschnittlichen Partikeldicke unter 60 µm besteht oder diese enthält.

Das Gewichtsverhältnis des nicht wärmeleitenden oder schlecht wärmeleitenden anorganisch-chemischen Füllstoffes zu dem feinstteiligen Metallpulver, Metallegierungspulver, keramikmetall- oder -mikrometallpartikelhaltigen Pulver beträgt 12 : 1 bis 1 : 12, vorzugsweise 5 : 1 bis 1 : 5 (in der Verformungsoberflächenschicht der Negativtiefziehform).

In der Oberflächenschicht sind nach einer bevorzugten Ausführungsform zusätzlich Fasern aus anorganisch-chemischen Material, vorzugsweise Glasfasern, enthalten.

Die mittlere Teilchengröße (bezogen auf die Formoberflächenschicht) des anorganisch-chemisch feinteiligen Füllstoffes zu dem feinteiligen Metallpulver steht im Verhältnis von 3 : 1 bis 1 : 10, vorzugsweise 1 : 1 bis 1 : 3.

Die Negativtiefziehform und der Stempel sind bevorzugt in einer mit Unterdruck oder mit Überdruck beaufschlagbaren Formkammer angeordnet.

Im Rahmen einer bevorzugten ausführungsform wird eine (aus einer oder mehreren Schichten bestehende) Kunststoffbahn oder Kunststoffolie, insbesondere flexible thermoverformbare Kunststoffbahn oder flexible Tiefziehfolie, bestehend aus 90 bis 25 Gew.-%, vorzugsweise 85 bis 28 Gew.-%, eines Vinylchloridhomo-, -co-, -pfropfpolymerisates und/oder einer Legierung oder Mischung auf der Basis von Polyvinylchlorid und 10 bis 75 Gew.-%, vorzugsweise 15 bis 72 Gew.-%, (bezogen auf 100 Gew.-% der Kunststoffmischung oder -legierung ohne Zusatzmittel, Füllstoffe, Stabilisatoren, Verarbeitungshilfsmittel), mindestens eines Modifizierungsmittels mit einer Glasumwandlungstemperatur von größer als 70 °C, vorzugsweise größer als 80 °C, und/oder mindestens eines Modifizierungsmittels und einer Glasumwandlungstemperatur von kleiner als 60 °C, vorzugsweise kleiner als 50 °C, sowie zusätzlich mindestens einem Stabilisierungsmittel oder Stabilisierungsmittelgemisch und gegebenenfalls Füllstoffen, Antioxidantien, Weichmacher, Gleitmittel, Verarbeitungshilfsmittel, Farbstoffe oder Farbpigmente, Flammschutzmittel oder andere Zusatzmittel oder Gemische von einem oder mehreren dieser Stoffe, zur Thermoverformung gemäß der Erfindung im Negativtiefziehverfahren eingesetzt.

Das Gewichtsverhältnis des Modifizierungsmittels oder Modifizierungsmittelgemisches mit einer Glasumwandlungstemperatur von größer als 70 °C, vorzugsweise größer als 80 °C, zu dem weiteren Modifizierungsmittel oder Modifizierungsmittelgemisch mit einer Glasumwandlungstemperatur von kleiner als 60 °C, vorzugsweise kleiner als 50 °C, beträgt 4 : 1 bis 1 : 4, vorzugsweise 3 : 1 bis 1 : 3.

Das Polymere oder das Polymergemisch (Modifizierungsmittel), das eine Glasumwandlungstemperatur von größer als 70 °C, vorzugsweise größer als 80 °C, besitzt, ist bevorzugt ein Styrol-Acrylnitril-Copolymerisat (SAN), ein Methylstyrol-Acrylnitril-Copolymerisat, ein Styrol-Maleinsäureanhvdrid-Copolymerisat, ein Polymethylmethacrylat (PMMA) und/oder ein Copolymerist aus einem oder mehreren Acrylestern mit Acrylnitril oder eine Mischung von zwei oder mehreren dieser Polymerisate oder Copolymerisate, während das andere Polymere oder Polymergemisch (Modifizierungsmittel) ein Homo-, Pfropf-, Copolymerisat oder eine Kunststofflegierung oder -mischung mit polaren Gruppen mit einer Glasumwandlungstemperatur von kleiner als 60 °C, vorzugsweise kleiner als 50 °C, vorzugsweise Thylen-Vinylacetat-Copolylymerisat und/oder Ethylen-Vinvlacetat-Kohlenmonoxid-Terpolymerisat iat.

Die Erfindung betrifft weiterhin eine Vorrichtung zum Aufbringen der Behandlungsflüssigkeit, bei der in einem Abstand zu der Negativtiefziehform Düsen zum Aufsprühen der Behandlungsflüssigkeit angeordnet sind, vorzugsweise bewegbar angeordnet sind.

Nach einer bevorzugten Ausführungsform der Erfindung ist eine Auffangwanne oder ein Auffangbecken für die versprühte Behandlungsflüssigkeit den Düsen bzw. der Sprühvorrichtung zugeordnet, die vorzugsweise unterhalb der Negativtiefziehform und/oder unterhalb der Sprühdüsen angeordnet ist.

### Beispiele

- Beispiel 1:: Eine Kunststoffolie mit einer Dicke von 500 µm wurde in die Negativtiefziehform gebracht. Die Zusammensetzung der Kunststoffolie:
70 Gew.-Teile chloriertes Polyethylen
30 Gew.-Teile Polyvinylchlorid mit einem K-Wert von 70
20 Gew.-Teile eines Gemisches von Stabilisatoren, Verarbeitungshilfsmitteln, Gleitmitteln sowie Mittel zum Schwerentflammbarmachen und Pigmenten
Die Härte betrug gemessen nach Shore-A 76.
Vor Einbringung in die Negativtiefziehform wurde die Kunststoffolie auf eine Temperatur von 170 °C aufgeheizt. Die Temperatur der Negativtiefziehform betrug 64 °C.
Nach dem Verformen unter Mitverwendung eines Stempels, der Formteile der Negativtiefziehform in Positivform aufwies, erfolgte eine Abkühlung, bis die Entformungstemperatur von 35 °C erreicht wurde.
- Beispiel 2:: Eine Kunststoffolie mit einer Dicke von 500 µm wurde in die Negativtiefziehform gebracht. Die Kunststoffolie hatte folgende Zusammensetzung:
25,00 Gew.-Teile Suspensionspolyvinylchlorid (PVC) K-Wert 70
25,25 Gew.-Teile Acrylnitril-Butadien-Styrol-Copolymerisat (ABS)
12,50 Gew.-Teile Styrol-Acrylnitril-Copolymerisat (SAN)
5,00 Gew.-Teile Acrylnitril-Acrylatharz (NAR)
24,00 Gew.-Teile Olefinisches Terpolymerisat mit statistisch verteilten Acetat- und Kohlenmonoxidgruppen
8,00 Gew.-Teile Aromatischer Polycarbonsäureester
1̅0̅0̅ G̅e̅w̅.̅-̅T̅e̅i̅l̅e̅
2,20 Gew.-Teile Stabilisatoren
2,50 Gew.-Teile Gleitmittel und/oder Antioxydantien
Die Härte betrug gemessen nach Shore-D 36.
Vor Einbringung in die Negativtiefziehform wurde die Kunststoffolie auf eine Temperatur von 156 °C aufgeheizt. Die Temperatur der Negativtiefziehform betrug 52 °C.
Nach dem Verformen unter Mitverwendung eines Stempels, der Formteile der Negativtiefziehform in Positivform aufwies, erfolgte eine Abkühlung mittels Wasser bis zur Entformungstemperatur von 32 °C.
- Beispiel 3:: Eine Kunststoffolie mit einer Dicke von 700 µm wurde in die Negativtiefziehform gebracht. Die Zusammensetzung der Kunststoffolie:
28,0 Gew.-Teile Suspensionspolyvinylchlorid (PVC) K-Wert 70
32,0 Gew.-Teile Acrylnitril-Butadien-Styrol-Copolymerisat (ABS)
15,0 Gew.-Teile Acrylnitril-Acrylatharz (NAR)
11,0 Gew.-Teile Ethylen-Vinylacetat-Copolymerisat mit polaren Gruppen (EVA)
14,0 Gew.-Teile Aromatischer Polycarbonsäureester
1̅0̅0̅,̅0̅ G̅e̅w̅.̅-̅T̅e̅i̅l̅e̅
2,0 Gew.-Teile Stabilisatoren
2,6 Gew.-Teile Gleitmittel und/oder Antioxidantien
Die Härte betrug gemessen nach Shore-D 37.
Vor Einbringung in die Negativtiefziehform wurde die Kunststoffolie auf eine Temperatur von 160 °C aufgeheizt. Die Temperatur der Negativtiefziehform betrug 56 °C.
Nach dem Verformen unter Mitvewendung eines Stempels, der Formteile der Negativtiefziehform in Positivform aufwies, erfolgte eine Abkühlung mittels einer Behandlungsflüssigkeit bis zur Temperatur von 45 °C. Als Behandlungsmittel diente ein Sperrschichtmittel in flüssiger Form. Danach erfolgte weitere Abkühlung bis zur Entformung. Nach der Entformung wurde das Formteil hinterschäumt. Die Sperrschicht war auf der Basis von Methacrylsäuremethylester.
- Beispiel 4:: Eine Kunststoffolie mit einer Dicke von 650 µm wurde in die Negativtiefziehform gebracht. Die Kunststoffolie hatte folgende Zusammensetzung:
50,0 Gew.-Teile Ethylen-Vinylacetat-KohlenmonoxidTerpolymerisat
50,0 Gew.-Teile Polyvinylchlorid (E-PVG)
5,5 Gew.-Teile eines Stabilisatorgemisches.
Die Härte betrug gemessen nach Shore-D 38.
Vor Einbringung in die Negativtiefziehform wurde die Kunststoffolie auf eine Temperatur von 168 °C aufgeheizt. Die Temperatur der Negativtiefziehform betrug 62 °C.
Nach dem Verformen unter Mitvewendung eines Stempels, der Formteile der Negativtiefziehform in Positivform aufwies, erfolgte eine Abkühlung bis Entformungstemperatur von 37 °C.
- Beispiel 5:: Eine Kunststoffolie mit einer Dicke von 600 µm wurde in die Negativtiefziehform gebracht. Die Kunststoffolie hatte folgende Zusammensetzung:
50,0 Gew. -Teile Ethylen-Vinylacetat-KohlenmonoxidTerpolymerisat
50,0 Gew.-Teile Polyvinylchlorid (E-PVG)
5,5 Gew.-Teile eines Stabilisatorgemisches
3,8 Gew.-Teile Treibmittelgemisch mit unterschiedlichen Zersetzungspunkten
Vor Einbringung in die Negativtiefziehform wurde die Kunststoffolie auf eine Temperatur von 170 °C aufgeheizt. Die Temperatur der Negativtiefziehform betrug 62 °C. Das Treibmittelgemisch schäumte aus.
Nach dem Verformen unter Mitvewendung eines Stempels, der Formteile der Negativtiefziehform in Positivform aufwies, erfolgte eine Abkühlung mittels Wasser, nachfolgend mittels einer Haftvermittlerflüssigkeit bis zur Entformungstemperatur von 37 °C. Der Haftvermittler war auf der Basis von Ethylen-Vinylacetat-Copolymerisat.

### Zeichnungsbeschreibung

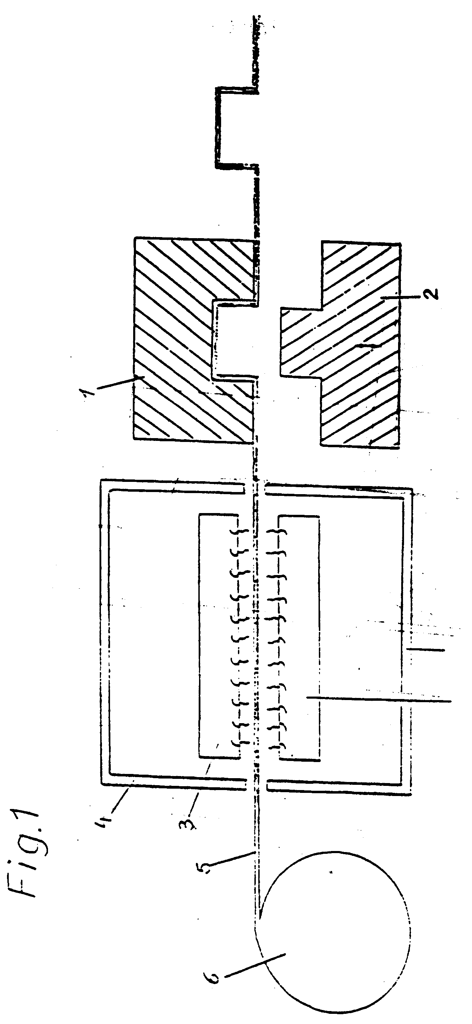

In der Figur 1 ist schematisch ein Ausführungsbeispiel der erfindungsgemäßen Vorrichtung dargestellt.

Die Kunststoffolienbahn (5) wird in der Negativtiefziehform (1) unter Mitverwendung des Stempels (2) thermoverformt. Vor der Thermoverformung wird die von der Abwicklungsvorrichtung (6) kommende Kunststoffolienbahn (5) durch die Heizvorrichtung (3) in der Heizkammer (4) auf eine Temperatur innerhalb des thermoplastischen Bereiches der Folie aufgeheizt.

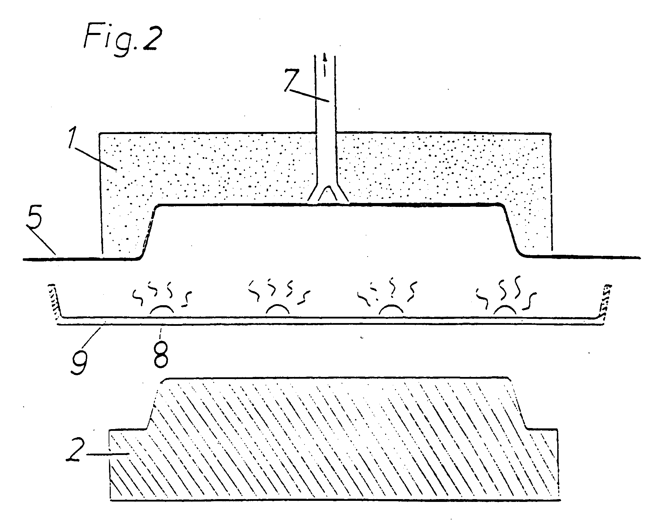

In der Figur 2 ist eine weitere Ausführungsform der erfindungsgemäßen Vorrichtung schematisch dargestellt.

Die mikroporösen Strukturen und Mikroporen sowie Mikropartikel enthaltende Negativtiefziehform (1) enthält eine Vorrichtung oder Zuführungsleitung (7) zum Anlegen eines Unterdruckes (oder bei Entformung eines Blasdruckes), wobei die Zuführungsleitung oder Abführungsleitung so an der Negativtiefziehform angebracht ist, daß ein möglichst gleichmäßiger Druck oder Unterdruck oder an bestimmten Stellen ein etwas erhöhter Unterdruck oder Überdruck an die Kunststoffolienbahn (5) angelegt werden kann.

Der Negativtiefziehform ist der Stempel (2) und die Auffangwanne (9) mit Düsen (8) zugeordnet.

## Patentansprüche

1. Verfahren zur Herstellung von Formteilen oder Gegenständen aus thermoverformbaren Kunststoffolien, thermoverformbaren kunststoffhaltigen Bahnen oder Kunststoffplatten nach dem Negativtiefziehverfahren, wobei die Kunststoffolie, Kunststoffbahn oder Kunststoffplatte in mindestens einer Vorwärm- und/oder Aufheizstation vorgewärmt und/oder auf eine Temperatur innerhalb des thermoplastischen Bereiches aufgeheizt, über einen Spann- oder Abdichtungsrahmen der Tiefziehform gespannt, und durch einen Stempel oder eine ähnliche Vorrichtung vorgeformt und unter Verwendung einer Druckdifferenz in die kältere, poröse Tiefziehform gebracht und in dieser thermoverformt wird, dadurch gekennzeichnet, daß das Verfahren zur Herstellung von Formteilen oder Gegenständen für Kraftfahrzeuge und Flugzeuge verwendet wird, wobei die aufgeheizten, eingespannten thermoverformbaren Kunststoffolien, Kunststoffbahnen oder Kunststoffplatten emissionsarm sind, einen Gesamtgehalt der bei der Verformungstemperatur und Verformungszeit flüchtigen Bestandteile kleiner 3 Gew.-% besitzen und eine Temperaturdifferenz von mehr als 100 °C gegenüber der kälteren Negativtiefziehform, die auf eine Temperatur von 18 bis 79 °C eingestellt wird, aufweisen und vorzugsweise durch Stützluft oder Stützgas gehalten, nachfolgend durch Druckunterschied zu der Negativtiefziehform hin gewölbt, wobei der für die Verformung verwendete Stempel in Teilbereichen dem herzustellenden Formteil oder Gegenstand im wesentlichen entspricht und eine Negativtiefziehform verwendet wird, die eine mikroporöse, luftdurchlässige Formoberfläche und eine mikrometallpartikelhaltige, keramik-metall- und/oder keramik-mikrometallpartikelhaltige und feinstteilige Füllstoffe enthaltende Schicht oder Oberfläche mit mikroskopisch feinen Strukturen und mit einer durchschnittlichen Metallschichtdicke oder Metallpartikeldicke unter 60 µm aufweist und neben Oberflächenfeinstrukturen zusätzliche Dekorstrukturen besitzt, daß durch die Negativtiefziehform, die mit einem Kühlsystem oder mit einer Kühlmittelleitung versehen ist, die Folien, Platten oder Bahnen angesaugt sowie abgekühlt und unter Narbgebung und/oder Oberflächendekoration thermoverformt werden, wobei nachfolgend das durch Thermoverformen hergestellte Formteil oder der Gegenstand in der Negativtiefziehform unter Verwendung einer Temperaturdifferenz von mehr als 100 °C (bezogen auf die Temperatur der Kunststoffolie, -bahn oder -platte unmittelbar vor oder im Augenblick der Einbringung in die Negativtiefziehform) gekühlt oder schockgekühlt wird.

2. Verfahren nach Anspruch 1, dadurch gekennzeichnet, daß die Kunststoffolie, Kunststoffbahn oder Kunststoffplatte im kalten oder im vorerwärmten Zustand zwischen dem geöffneten Stempel und der geöffneten Negativtiefziehform geführt, dort mittels verschiebbar angeordneter Heizvorrichtung, vorzugsweise Heizschienen, Heizgitter oder Heizstrahler, auf die Folien- oder Bahntemperatur oder Plattentemperatur innerhalb des thermoplastischen Bereiches aufgeheizt wird, wobei gegebenenfalls die Kunststoffolie, Kunststoffbahn oder -platte durch Vorblasen, Stützluft oder Stützgas gehalten wird, die Heizvorrichtung aus dem Bereich der Negativtiefziehform und dem Stempel herausgefahren oder herausgeschwenkt wird, nachfolgend eine Verformung, vorzugsweise durch Erzeugung eines Druckunterschiedes durch Einführung von Druckluft von der Rückseite der Folie, Bahn oder Platte her (nicht zu narbende oder zu dekorierende Seite) oder vom Stempel her oder durch einen Unterdruck von der Negativtiefziehform bzw. der zu narbenden Seite her, und danach die Vorformung durch den Stempel durchgeführt wird und nachfolgend die endgültige Thermoverformung in der Negativtiefziehform durch Erhöhung des Druckunterschiedes, vorzugsweise durch Einführung von Preßgas oder Preßluft von der nicht zur Narbgebung oder Dekoration vorgesehenen Folien-, Bahnen- oder Plattenseite her und/oder durch Unterdruck (Vakuum) von der Seite der Negativtiefziehform her durchgeführt wird, wobei im Augenblick der Berührung der Kunststoffolie, Kunststoffbahn oder Kunststoffplatte mit der strukturierten Oberfläche oder Wandung des Negativtiefziehwerkzeuges die Kunststoffolie, Kunststoffbahn oder Kunststoffplatte diese Oberflächenstruktur (in Positivform) als Oberflächendekoration, Narbung oder Strukturierung annimmt und nachfolgend die thermoverformte Folie in der Negativtiefziehform abgekühlt wird.

3. Verfahren nach Ansprüchen 1 und 2, dadurch gekennzeichnet, daß die Kunststoffolie, kunststoffhaltige Bahn oder Kunststoffplatte vor der Einbringung in die Negativtiefziehform auf eine Temperatur in der Nähe oder oberhalb des Schmelzbereiches, Schmelzpunktes (bis 260 °C) oder auf eine Temperatur innerhalb des thermoplastischen Bereiches (bis 260 °C) aufgeheizt wird und die Werkzeugtemperatur (Temperatur der Negativtiefziehform) auf
25 bis 76 °C
unter Kühlung oder Temperierung der Negativtiefziehform eingestellt wird.

4. Verfahren nach einem oder mehreren der Ansprüche 1 bis 3, dadurch gekennzeichnet, daß die Narbgebung und/oder Oberflächendekoration der Kunststoffolie, kunststoffhaltigen Bahn oder Kunststoffplatte unter Verwendung einer porösen, luftdurchlässigen, vorzugsweise mikroporösen luftdurchlässigen Formoberfläche und/oder Aufrauhungen im Bereich bis zu einer Durchschnittlichen Größe, Höhe oder Breite
bis zu 300 µm, vorzugsweise
bis zu 100 µm,
aufweisenden Negativtiefziehform durchgeführt wird, wobei als Formoberfläche der Negativtiefziehform eine solche aus einem gehärteten Bindemittel und mindestens einem Füllstoff, vorzugsweise Füllstoffgemisch, verwendet wird, die mit mindestens einer ebenfalls porösen oder mikroporösen luftdurchlässigen Unterschicht der Negativtiefziehform verbunden ist.

5. Verfahren nach einem oder mehreren der Ansprüche 1 bis 4, dadurch gekennzeichnet, daß dünne Folien mit einer Dicke von
100 bis 1400 µm, vorzugsweise
200 bis 1000 µm,
und/oder einer Shore-D-Härte von
20 bis 60, vorzugsweise
25 bis 40,
unter Narb- und/oder Dekorgebung im Negativtiefziehverfahren verformt werden.

6. Verfahren nach einem oder mehreren der Ansprüche 1 bis 5, dadurch gekennzeichnet, daß die Kunststoffolien mit einem wärmestabilen schäumbaren Kunststoff oder Schaum, vorzugsweise Polyolefinschaum, mit einer Schaumschicht dicke von
0,5 bis 10 mm, vorzugsweise
1,5 bis 5 mm,
laminiert oder versehen werden, bevor sie in der Negativtiefziehform dreidimensional verformt und die Folienoberfläche genarbt und/oder oberflächenstrukturiert wird, wobei gegebenenfalls die Schaumschicht mit einem Träger oder einer Trägerschicht hinterlegt und der Träger vorzugsweise vorgeformt, lagegenau ausgerichtet und mit dem und/oder der verformten Kunststoffolienbahn verbunden wird und/oder daß die Kunststoffolie nach der dreidimensionalen Verformung, Narbung und/oder Oberflächenstrukturierung in dem Werkzeug nach oder während der Abkühlung entweder in der Form selbst oder in einem getrennten Arbeitsgang und/oder in einer anderen Form mit einem weichen bis mittelharten Schaum, vorzugsweise Polyurethanschum, hinterschäumt wird, wobei gegebenenfalls bei der Hinterschäumung zusätzlich ein Träger oder eine Trägerschicht eingelegt wird.

7. Verfahren nach einem oder mehreren der Ansprüche 1 bis 6, dadurch gekennzeichnet, daß während der Thermoverformung, Strukturierung und/oder Narbung nachfolgend oder gleichzeitig von der (nicht mit der Negativtiefziehform in Kontakt oder Verbindung stehenden) Rückseite der Kunststoffbahn her ein Behandlungsmittel auf die Kunststoffbahn aufgebracht wird.

8. Verfahren nach Anspruch 7, dadurch gekennzeichnet, daß als Behandlungsmittel eine Kühlflüssigkeit oder kaltes Gas verwendet wird, das die in der Negativtiefziehform befindliche Kunststoffbahn auf die Entformungstemperatur oder in die Nähe der Entformungstemperatur abkühlt oder schockkühlt.

9. Verfahren nach Ansprüchen 7 und 8, dadurch gekennzeichnet, daß als Behandlungsmittel ein Haftvermittler, vorzugsweise eine Haftvermittlerflüssigkeit oder eine einen Haftvermittler enthaltende Flüssigkeit, ein Klebstoff, eine im Sprühverfahren aufzubringende Kunststoffschicht und/oder eine Sperrschicht verwendet wird.

10. Verfahren nach Ansprüchen 8 und 9, dadurch gekennzeichnet, daß das flüssige Behandlungsmittel auf die Rückseite der in der Negativtiefziehform befindlichen thermoverformten Kunststoffbahn unter Sprühen, Fluten und/oder Spritzen aufgebracht und das nicht von der Kunststoffbahn aufgenommene Behandlungsmittel aufgefangen und weiterverwendet, vorzugsweise im Kreislauf geführt wird.

11. Verfahren nach einem oder mehreren der Ansprüche 7 bis 10, dadurch gekennzeichnet, daß die Temperatur der Behandlungsflüssig` keit zwischen
15 bis 75 °C
liegt.

12. Verfahren nach einem oder mehreren der Ansprüche 1 bis 11, dadurch gekennzeichnet, daß im Negativtiefziehverfahren Kunststoffolien, kunststoffhaltige Bahnen oder Kunststoffplatten verformt werden, die aus Kunststoff, einer Kunststoffmischung oder Kunststofflegierung und bezogen auf 100 Gew.-Teile Kunststoff, Kunststoffmischung oder Kunststoff legierung
0,01 bis 15 Gew.-Teile, vorzugsweise
0,1 bis 6 Gew.-Teile,
Verarbeitungshilfsmittel sowie gegebenenfalls zusätzlich Füllstoffe, Farbpigmente, Farbstoffe oder anderen Zusatzstoffen bestehen oder diese enthalten und/oder im Negativtiefziehverfahren emissionsarme Kunststoffolien, kunststoffhaltige Bahnen oder Kunststoffplatten verformt werden, wobei der Gesamtgehalt der bei der Verformungstemperatur und Verformungszeit flüchtigen Bestandteile
kleiner als 2 Gew.-%
ist.

13. Verfahren nach Anspruch 12, dadurch gekennzeichnet, daß der Kunststoff, die Kunststoffmischung oder Kunststofflegierung der emissionsarmen Kunststoffolien, kunststoffhaltigen Bahnen oder Kunststoffplatten aus Vinylchloridhomo- oder -copolymerisat (vorzugsweise in Kombination mit einem plastifizierenden und/oder elastomermodifizierten Thermoplasten), aus einem Olefinhomo- und/oder -copolymerisat, chlorierten Polyethylen, Ethylen-Propylen-Copolymerisat (EPM), Ethylen-Propylen-Dien-Polymerisat (EPDM), thermoplastischen Polyester, thermoplastischen Polyurethan, kautschukartigen Polyesterurethan und/oder Polyvinylidenfluorid, besteht oder einen dieser Kunststoffe als Bestandteil enthält und/oder daß der Kunststoff, die Kunststoffmischung oder die Kunststofflegierung aus Vinylchloridhomo- oder -copolymerisat und einem Modifiziermittel, vorzugsweise einem plastifizierenden und/oder elastomermodifizierten Thermoplasten, Ethylen-Vinylacetat-Copolymerisat, vorzugsweise mit einem Acetatgehalt von größer als 60 Gew.-%, Ethylen-Vinylacetat-Kohlenmonoxid-Terpolymerisat (Elvaloy), einem thermoplastischen Kautschuk, vorzugsweise Ethylen-Propylen-Copolymerisat (EPM) und/oder Ethylen-Propylen-Dien-Terpolymerisat (EPDM), einem Kautschuk auf der Basis von Styrolpolymerisat oder Styrolblockpolymerisaten, chloriertem Polyethylen, einem thermoplastischen Polyurethan, einem thermoplastischen Polyesterharz, Olefinelastomer, Acrylat- und/oder Methacrylathomo-, -co- und -pfropfpolymerisat, Nitrilkautschuk, Methylbutadien-Styrolpolymerisat (MBS) sowie gegebenenfalls anderen Modifizierungsmitteln, vorzugsweise Styrol-Acrylnitril-Copolymerisat (SAN), Acrylnitril-Butadienharz (NB), Acrylnitril-Butadien-Copolymerisat (ABS), ASA, AEN, ABS + MABS (Butadien-Styrol-Maleinsäure-Terpolymerisat) und/oder aliphatische oder aromatische Carbonsäureester, vorzugsweise Trimellithsäureester, Adipate oder Mischester derselben besteht oder eine oder mehrere dieser Verbindungen enthält.

14. Verfahren nach einem oder mehreren der Ansprüche 1 bis 13, dadurch gekennzeichnet, daß die Kunststoffolie oder Kunststoffolienbahn oder Platte vom Extruder oder eine ähnlichen Plastifiziervorrichtung kommend unter Ausnutzung der bereits vorhandenen Wäremkapazität und gegebenenfalls durch zusätzliche Erwärmung auf die Temperatur im thermoplastischen Bereich gebracht oder gehalten wird und/oder daß die Entformung durch oder unter Mitverwendung eines Blas- oder Gasdruckes erfolgt, wodurch eine Erleichterung der Entformung, insbesondere in kritischen Bereichen (Hinterschneidungen) ermöglicht wird.

15. Verfahren nach einem oder mehreren der Ansprüche 1 bis 14, dadurch gekennzeichnet, daß als Kunststoffolie ein Kunststoffolienlaminat eingesetzt wird, bei dem eine Schicht mit einem Treibmittel oder Treibmittelgemisch versehen ist, das bei dem Aufheizvorgang, bei dem Umformvorgang und/oder Narbgebungsvorgang aufschäumt oder aufzuschäumen beginnt, wobei die gebildete geschäumte Schicht als Dekor- und/oder Narbgebungsschicht oder als Polsterschicht auf der Rückseite der strukturierten und/oder genarbten Folie dient.

16. Verwendung des Verfahrens nach einem oder mehreren der Ansprüche 1 bis 15 für Sicherheitsabdeckungen, Seitenwände, Vorder- und Rückwandteile, Schalttafeln (Armaturenbretter) sowie Seitenpfosten für Kraftfahrzeuge und Flugzeuge.

17. Vorrichtung zur Herstellung von Formteilen oder Gegenständen aus thermoverformbaren Kunststoffolien, thermoverformbaren kunststoffhaltigen Bahnen oder Kunststoffplatten nach dem Tiefziehverfahren, bestehend aus einer porösen Tiefziehform, der als Gegenwerkzeug ein Stempel oder eine ähnliche Vorrichtung zugeordnet ist, wobei die Negativtiefziehform mit mindestens einer Zuleitung und/oder Vorrichtung zur Ausübung eines Druckunterschiedes versehen ist und die Negativtiefziehvorrichtung mit einem Spann-oder Abdichtungsrahmen zum Einspannen der thermoverformbaren Kunststoffolien, thermoverformbaren kunststoffhaltigen Bahnen oder Kunststoffplatten und einem Kühlsystem oder Kühlmittelleitung ausgestattet ist, dadurch gekennzeichnet, daß die Negativtiefziehform die Form eines Kraftfahrzeugformteiles, Flugzeugformteiles, Kraftfahrzeug- oder Flugzeugteiles oder -gegenstandes in Negativform aufweist, das die mikroporöse Formoberfläche luftdurchlässig ist, Oberflächenfeinstrukturen zur Narbgebung sowie gegebenenfalls Dekorstrukturen aufweist und eine metallegierungs-, mikrometallpartikelhaltige, keramik-metall- und/oder keramikmikrometallpartikelhaltige und feinstteilige Füllstoffe enthaltende Schicht oder Oberfläche mit einer durchschnittlichen Partikeldicke unter 60 µm besitzt, daß der Stempel oder die ähnliche Vorrichtung die Form oder Formteilbereiche der Negativtiefziehform (in Positivform) aufweist, und die Negativtiefziehform in Kombination mit einer Zuleitungsvorrichtung und/oder Abzugsvorrichtung für die Kunststoffolie, -bahn oder Platte oder Transportvorrichtung für das hergestellte verformte Formteil oder den Gegenstand steht.

18. Vorrichtung nach Anspruch 17, dadurch gekennzeichnet, daß die Negativtiefziehform mindestens eine Oberflächenschicht als Formoberfläche enthält, die aus einem Bindemittel, einem nicht wärmeleitenden oder schlecht wärmeleitenden anorganisch-chemischen feinteiligen Füllstoff, vorzugsweise Keramikpulver, mit einer mittleren Teilchengröße unter 50 µm, sowie einem feinteiligen metall-, metallegierungs-, mikrometallpartikelhaltigen, keramikmetallpartikelhaltigen, feinteiligen Pulver oder pulverförmigen Gemisch mit einer durchschnittlichen Partikeldicke unter 60 µm besteht oder diese enthält.

19. Vorrichtung nach Ansprüchen 17 und 18, dadurch gekennzeichnet, daß das Gewichtsverhältnis des Füllstoffes zu dem feinstteiligen Metallpulver, Metallegierungspulver, keramikmetall- oder keramikmikrometallpartikelhaltige Pulver 12 : 1 bis 1 : 12, vorzugsweise 5 : 1 bis 1 : 5 beträgt und/oder daß in der Oberflächenschicht zusätzlich Fasern aus anorganisch-chemischem Material, vorzugsweise Glasfasern, enthalten sind.

20. Vorrichtung nach einem oder mehreren der Ansprüche 17 bis 19, dadurch gekennzeichnet, daß die mittlere Teilchengröße des Füllstoffes zu dem feinteiligen Metallpulver im Verhältnis von 3 : 1 bis 1 : 10, vorzugsweise 1 : 1 bis 1 : 3, steht.

21. Vorrichtung nach einem oder mehreren der Ansprüche 17 bis 20, dadurch gekennzeichnet, daß die Negativtiefziehform und der Stempel in einer mit Unterdruck oder mit Überdruck beaufschlagbaren Formkammer angeordnet sind.

22. Vorrichtung nach einem oder mehreren der Ansprüche 17 bis 21, dadurch gekennzeichnet, daß in einem Abstand zu der Negativtiefziehform Düsen zum Aufsprühen der Behandlungsflüssigkeit angeordnet, vorzugsweise bewegbar angeordnet, sind.

23. Vorrichtung nach einem oder mehreren der Ansprüche 17 bis 22, dadurch gekennzeichnet, daß eine Auffangwanne oder ein Auffangbecken für die versprühte Behandlungsflüssigkeit der Vorrichtung zugeordnet, vorzugsweise unterhalb der Negativtiefziehform und/oder unterhalb der Sprühdüsen angeordnet, ist.

## Claims

1. A method for producing moulded parts or objects from thermoforming plastic films, thermoforming plastic-containing webs or plastic plates using the negative deep-drawing process, in which the plastic film, plastic web or plastic plate is preheated and/or heated to a temperature within the thermoplastic range in at least one preheating and/or heating station, stretched over a stretching frame or sealing frame of the deep-drawing mould, and preformed by a male die or a similar device and is introduced, using a pressure difference, into the colder, porous negative deep-drawing mould and is thermoformed therein, characterised in that the method is used for producing moulded parts or objects for motor vehicles and aeroplanes, with the heated, clamped thermoforming plastic films, plastic webs or plastic plates being low-emission ones, having a total content of the constituents which are volatile at the deformation temperature and deformation time of less than 3% by weight and having a temperature difference of more than 100°C from the colder negative deep-drawing mould, which is set to a temperature of 18 to 79°C, and preferably held by supporting air or supporting gas are then curved towards the negative deep-drawing mould by means of a pressure difference, the male die used for the deformation substantially corresponding in partial regions to the moulded part or object to be produced and a negative deep-drawing mould being used which has a microporous, air-permeable mould surface and a layer or surface containing micrometal particles, ceramic-metal particles and/or ceramic-micrometal particles and very finely divided fillers with microscopically fine textures and with an average metal layer thickness or metal particle thickness of less than 60 µm and in addition to fine surface textures has additional decorative textures, that the films, plates or webs are sucked in by the negative deep-drawing mould which is provided with a cooling system or with a coolant line, and are cooled, and are thermoformed with embossing and/or surface decoration, the moulded part produced by thermoforming or the object then being cooled or shock-cooled in the negative deep-drawing mould, using a temperature difference of more than 100°C (relative to the temperature of the plastic film, plastic web or plastic plate directly before or at the moment of introduction into the negative deep-drawing mould).

2. A method according to Claim 1, characterised in that the plastic film, plastic web or plastic plate in the cold or preheated state is guided between the open male die and the open negative deep-drawing mould, is heated therein by means of displaceable heating means, preferably heating rails, heating grids or radiant heaters, to the film or web temperature or plate temperature within the thermoplastic range, with the plastic film, plastic web or plastic plate being optionally held by pre-blowing, supporting air or supporting gas, the heating means is moved or pivoted out of the region of the negative deep-drawing mould and the male die, then deformation is carried out, preferably by generating a pressure difference by introducing compressed air from the rear side of the film, web or plate (side which is not to be embossed or decorated) or from the male die or by an underpressure from the negative deep-drawing mould or the side which is to be embossed, and then the preforming is performed by the male die and subsequently the final thermoforming is performed in the negative deep-drawing mould by increasing the pressure difference, preferably by introducing compressed gas or compressed air from the side of the film, web or plate not intended for embossing or decoration, and/or by underpressure (vacuum) from the side of the negative deep-drawing mould, with the plastic film, plastic web or plastic plate, at the moment of contact of the plastic film, plastic web or plastic plate with the textured surface or wall of the negative deep-drawing mould, adopting this surface texture (in a positive form) as surface decoration, embossed pattern or texturing and then the thermoformed film being cooled in the negative deep-drawing mould.

3. A method according to Claims 1 and 2, characterised in that the plastic film, plastic-containing web or plastic plate is heated to a temperature in the vicinity of or above the melting range, melting point (up to 260°C) or to a temperature within the thermoplastic range (up to 260°C) before introduction into the negative deep-drawing mould and the mould temperature (temperature of the negative deep-drawing mould) is set to
25 to 76°C,
with cooling or temperature control of the negative deep-drawing mould.

4. A method according to one or more of Claims 1 to 3, characterised in that the embossing and/or surface decoration of the plastic film, plastic-containing web or plastic plate is carried out using a porous, air-permeable, preferably microporous, air-permeable, mould surface and/or a negative deep-drawing mould having roughened areas in the range up to an average size, height or width of
up to 300 µm, preferably
up to 100 µm,
with a mould surface consisting of a hardened binder and at least one filler, preferably filler mixture, being used as the mould surface of the negative deep-drawing mould, which surface is joined to at least one likewise porous or microporous air-permeable underlayer of the negative deep-drawing mould.

5. A method according to one or more of Claims 1 to 4, characterised in that thin films having a thickness of
100 to 1,400 µm, preferably
200 to 1,000 µm,
and/or a Shore D hardness of
20 to 60, preferably
25 to 40,
are shaped with embossing and/or decoration in the negative deep-drawing process.

6. A method according to one or more of Claims 1 to 5, characterised in that the plastic films are laminated or provided with a heat-stable foamable plastic or foam, preferably polyolefin foam, having a foam layer thickness of
0.5 to 10 mm, preferably
1.5 to 5 mm,
before they are three-dimensionally shaped in the negative deep-drawing mould and the film surface is embossed and/or surface-textured, with the foam layer optionally being backed with a backing or a backing layer and the backing preferably being preformed, oriented in accurate position and joined to the foam and/or the shaped plastic web and/or that the plastic film after the three-dimensional shaping, embossing and/or surface-texturing in the mould after or during cooling is back-foamed either in the mould itself or in a separate operation and/or in another mould with a soft to medium-hard foam, preferably polyurethane foam, with optionally a backing or a backing layer being additionally inserted during back-foaming.

7. A method according to one or more of Claims 1 to 6, characterised in that during the thermoforming, texturing and/or embossing subsequently or simultaneously a treatment agent is applied to the plastic web from the rear side (not in contact with or joined to the negative deep-drawing mould) of the plastic web.

8. A method according to Claim 7, characterised in that a cooling liquid or cold gas which cools or shock-cools the plastic web located in the negative deep-drawing mould to the mould release temperature or to within the vicinity of the mould release temperature is used as the treatment agent.

9. A method according to Claims 7 and 8, characterised in that an adhesion promoter, preferably an adhesion promoter liquid or a liquid containing an adhesion promoter, an adhesive, a plastic layer to be applied in a spraying operation and/or a barrier layer is used as the treatment agent.

10. A method according to Claims 8 and 9, characterised in that the liquid treatment agent is applied to the rear side of the thermoformed plastic web located in the negative deep-drawing mould by spraying, flooding and/or atomising, and the treatment agent not taken up by the plastic web is collected and re-used, preferably recycled.

11. A method according to one or more of Claims 7 to 10, characterised in that the temperature of the treatment liquid is between
15 and 75°C.

12. A method according to one or more of Claims 1 to 11, characterised in that in the negative deep-drawing process plastic films, plastic-containing webs or plastic plates are shaped which consist of or contain plastic, a plastics mixture or plastics alloy and, relative to 100 parts by weight plastic, plastics mixture or plastics alloy,
0.01 to 15 parts by weight, preferably
0.1 to 6 parts by weight,
processing aid and also optionally additionally fillers, colour pigments, dyes or other additives and/or in the negative deep-drawing process low-emission plastic films, plastic-containing webs or plastic plates are shaped, with the total content of the constituents which are volatile at the deformation temperature and deformation time being
less than 2% by weight.

13. A method according to Claim 12, characterised in that the plastic, the plastics mixture or plastics alloy of the low-emission plastic films, plastic-containing webs or plastic plates consists of vinyl chloride homopolymer or copolymer (preferably in combination with a plasticising and/or elastomer-modified thermoplastic), of an olefin homopolymer and/or copolymer, chlorinated polyethylene, ethylene-propylene copolymer (EPM), ethylene-propylene-diene polymer (EPDM), thermoplastic polyester, thermoplastic polyurethane, rubber-like polyester urethane and/or polyvinylidene fluoride or contains one of these plastics as a constituent and/or that the plastic, the plastics mixture or the plastics alloy consists of vinyl chloride homopolymer or copolymer and a modifying agent, preferably a plasticising and/or elastomer-modified thermoplastic, ethylene-vinyl acetate copolymer, preferably having an acetate content of more than 60% by weight, ethylene-vinyl acetate-carbon monoxide terpolymer (Elvaloy), a thermoplastic rubber, preferably ethylene-propylene copolymer (EPM) and/or ethylene-propylene-diene terpolymer (EPDM), a rubber on the basis of styrene polymer or styrene block polymers, chlorinated polyethylene, a thermoplastic polyurethane, a thermoplastic polyester resin, olefin elastomer, acrylate and/or methacrylate homopolymer, copolymer and graft polymer, nitrile rubber, methyl butadiene-styrene polymer (MBS) and also optionally other modifying agents, preferably styrene-acrylonitrile copolymer (SAN), acrylonitrile-butadiene resin (NB), acrylonitrile-butadiene copolymer (ABS), ASA, AEN, ABS + MABS (butadiene-styrene-maleic acid terpolymer), and/or aliphatic or aromatic carboxylic acid esters, preferably trimellitic acid esters, adipates or mixed esters thereof, or contains one or more of these compounds.

14. A method according to one or more of Claims 1 to 13, characterised in that the plastic film or plastic film web or plate, coming from the extruder or a similar plasticising device, utilising the heat capacity already present, and optionally by additional heating is brought to or kept at the temperature in the thermoplastic range and/or that mould release takes place by or with the joint use of a blowing pressure or gas pressure, which makes it possible to facilitate mould release, in particular in critical areas (undercuts).

15. A method according to one or more of Claims 1 to 14, characterised in that a plastic film laminate is used as the plastic film in which one layer is provided with an expanding agent or expanding agent mixture which foams up or begins to foam up during the heating operation, during the forming operation and/or embossing operation, the resulting foamed layer serving as a decorative and/or embossed layer or as a cushion layer on the rear side of the textured and/or embossed film.

16. The use of the method according to one or more of Claims 1 to 15 for safety coverings, side walls, front and rear wall parts, electric control panels (dashboards) and also side struts for motor vehicles and aeroplanes.

17. An apparatus for producing moulded parts or objects from thermoforming plastic films, thermoforming plastic-containing webs or plastic plates according to the deep-drawing process, consisting of a porous deep-drawing mould with which a male die or a similar device is associated as a counter-mould, the negative deep-drawing mould being provided with at least one inlet line and/or device for exerting a pressure difference and the negative deep-drawing device being equipped with a stretching frame or sealing frame for clamping the thermoforming plastic films, thermoforming plastic-containing webs or plastic plates and a cooling system or coolant line, characterised in that the negative deep-drawing mould has the shape of a moulded part for a motor vehicle or for an aeroplane, part or object for a motor vehicle or aeroplane in negative form, that the microporous mould surface is air-permeable, has fine surface textures for embossing and also optionally decorative textures and has a layer or surface containing metal alloy particles, micrometal particles, ceramic-metal particles and/or ceramic-micrometal particles and very finely divided fillers, which layer or surface has an average particle thickness of less than 60 µm, that the male die or similar device has the shape or partial shaped regions of the negative deep-drawing mould (in the positive form), and the negative deep-drawing mould is in combination with a feed device and/or draw-off device for the plastic film, plastic web or plate or transport device for the shaped moulded part or the object produced.

18. An apparatus according to Claim 17, characterised in that the negative deep-drawing mould contains at least one surface layer as mould surface which consists of or contains a binder, a non-heat-conductive or poorly heat-conductive inorganic-chemical finely divided filler, preferably ceramic powder, with an average particle size of less than 50 µm, and also a finely divided powder or powder-like mixture containing metal particles, metal alloy particles, micrometal particles, ceramic-metal particles, which powder or mixture has an average particle thickness of less than 60 µm.

19. An apparatus according to Claims 17 and 18, characterised in that the weight ratio of the filler to the very finely divided metal powder, metal alloy powder, or powder containing ceramic-metal particles or ceramic-micrometal particles is 12 : 1 to 1 : 12, preferably 5 : 1 to 1 : 5, and/or that additionally fibres of inorganic-chemical material, preferably glass fibres, are contained in the surface layer.

20. An apparatus according to one or more of Claims 17 to 19, characterised in that the average particle size of the filler to the finely divided metal powder is in a ratio of 3 : 1 to 1 : 10, preferably 1 : 1 to 1 : 3.

21. An apparatus according to one or more of Claims 17 to 20, characterised in that the negative deep-drawing mould and the male die are arranged in a moulding chamber which can be acted upon by underpressure or by overpressure.

22. An apparatus according to one or more of Claims 17 to 21, characterised in that nozzles for spraying on the treatment liquid are located, preferably movably located, at a distance from the negative deep-drawing mould.

23. An apparatus according to one or more of Claims 17 to 22, characterised in that a collecting bath or a collecting basin for the sprayed treatment liquid is associated with the apparatus, preferably is located beneath the negative deep-drawing mould and/or beneath the spray nozzles.

## Revendications

1. Procédé de fabrication de pièces moulées ou d'objets à partir de feuilles de matières plastiques thermoformables, de bandes contenant des matières plastiques thermoformables ou de plaques de matières plastiques selon le procédé d'emboutissage en moule négatif, dans lequel la feuille, la bande ou la plaque plastique est préchauffée et/ou chauffée dans au moins un poste de préchauffage et/ou de chauffage à une température qui se situe dans la plage thermoplastique, tendue sur un châssis de tension ou d'étanchéité du moule d'emboutissage et moulée par un moule mâle ou un dispositif analogue et introduite dans le moule d'emboutissage poreux plus froid en utilisant une différence de pression, puis thermoformée dans ce moule d'emboutissage, caractérisé en ce qu'on utilise le procédé de fabrication de pièces moulées ou d'objets pour les véhicules automobiles et les avions, procédé dans lequel les feuilles, les bandes ou les plaques de matières plastiques thermoformables chauffées et tendues sont pauvres en émissions, présentent une teneur totale en composants volatils à la température de moulage et pour le temps de moulage inférieure à 3 % en poids et présentent une différence de température de plus de 100 °C vis-à-vis du moule d'emboutissage négatif froid, qui est réglé à une température de 18 - 79 °C, et sont maintenues de préférence par de l'air ou un gaz de soutien, sont ensuite bombées par application d'une différence de pression vers le moule d'emboutissage négatif, où le moule mâle utilisé pour le thermoformage correspond sensiblement aux contours partiels de la pièce moulée ou de l'objet à fabriquer et où on utilise un moule d'emboutissage négatif présentant une surface microporeuse, perméable à l'air et une couche ou une surface contenant des charges de microparticules métalliques, de particules métallo-céramiques et/ou de microparticules métallo-céramiques et des charges de fine granulométrie, présentant des fines textures microscopiques et une épaisseur de couche métallique moyenne ou une épaisseur de particules métalliques inférieure à 60 µm, et présentant, outre les fines textures superficielles, des textures décoratives supplémentaires; en ce que les feuilles, les plaques ou les bandes sont aspirées et refroidies dans un moule d'emboutissage négatif qui est doté d'un système de refroidissement ou d'une conduite d'agent de refroidissement, et thermoformées en adoptant un grain et/ou une décoration superficielle, la pièce moulée ou l'objet fabriqué par thermoformage étant ensuite refroidi(e) ou trempé(e) dans le moule d'emboutissage négatif par application d'une différence de température de plus de 100 °C (par rapport à la température de la feuille, de la bande ou de la plaque plastique directement avant ou au moment de l'introduction dans le moule d'emboutissage négatif).

2. Procédé selon la revendication 1, caractérisé en ce que la feuille, la bande ou la plaque plastique froide ou préchauffée est insérée entre le moule mâle ouvert et le moule d'emboutissage négatif ouvert, y est chauffée via un dispositif de chauffage mobile, de préférence des barres de chauffage, une grille de chauffage ou un radiateur chauffant, à la température de la feuille, de la bande ou de la plaque dans la plage thermoplastique, éventuellement la feuille, la bande ou la plaque de matières plastiques est maintenue par présoufflage d'air ou d'un gaz de soutien, le dispositif de chauffage est retiré ou basculé hors d'atteinte du moule d'emboutissage négatif et du moule mâle, ensuite on procède à un moulage, de préférence par instauration d'une différence de pression par introduction d'air comprimé par le verso de la feuille, de la bande ou de la plaque (pas par le côté à grainer ou à décorer) ou à partir du moule mâle ou par une dépression à partir du moule d'emboutissage négatif ou du côté à grainer, puis au prémoulage par le moule mâle et ensuite on effectue le thermoformage final dans le moule d'emboutissage négatif par augmentation de la différence de pression, de préférence par introduction de gaz comprimé ou d'air comprimé par le côté de la feuille, de la bande ou de la plaque où il n'est pas prévu de grainage ou de décoration et/ou par dépression (vide) du côté du moule d'emboutissage négatif, la feuille, la bande ou la plaque de matières plastiques adoptant, au moment du contact avec la surface ou la paroi texturée de l'outil d'emboutissage négatif cette texture superficielle (sous forme positive) comme décoration superficielle, grainage ou texture et la feuille thermoformée étant ensuite refroidie dans le moule d'emboutissage négatif.

3. Procédé selon les revendications 1 et 2, caractérisé en ce que la feuille plastique, la bande contenant une matière plastique ou la plaque plastique est chauffée, avant l'introduction dans le moule d'emboutissage négatif, à une température voisine ou supérieure à la plage de fusion ou au point de fusion (jusqu'à 260 °C), ou encore à une température qui se situe à l'intérieur de la plage thermoplastique (jusqu'à 260 °C), tandis que la température de l'outil (température du moule d'emboutissage négatif) est ajustée à 25 à 76 °C, par refroidissement ou équilibrage de température du moule d'emboutissage négatif.

4. Procédé selon une ou plusieurs des revendications 1 à 3, caractérisé en ce que le grainage et/ou la décoration superficielle de la feuille de matières plastiques, de la bande contenant une matière plastique ou de la plaque de matières plastiques se font via une surface de moulage poreuse et perméable à l'air, de préférence microporeuse et perméable à l'air et/ou par grenaillage dans la zone du moule d'emboutissage négatif présentant une dimension, hauteur ou largeur moyenne, jusqu'à 300 µm, de préférence jusqu'à 100 µm, la surface de moulage du moule d'emboutissage négatif est constituée d'un agent liant durci et d'au moins une charge, de préférence d'un mélange de charges, et est reliée à au moins une couche inférieure également poreuse ou microporeuse perméable à l'air du moule d'emboutissage négatif.

5. Procédé selon une ou plusieurs des revendications 1 à 4, caractérisé en ce qu'on moule des feuilles minces d'une épaisseur de 100 à 1.400 µm, de préférence 200 à 1.000 µm, et/ou d'une dureté shore 10 de 20 à 60, de préférence de 25 à 40, en appliquant un grainage et/ou une décoration dans le procédé d'emboutissage négatif.

6. Procédé selon une ou plusieurs des revendications 1 à 5, caractérisé en ce que les feuilles de matières plastiques sont revêtues ou dotées d'une matière plastique ou mousse expansable stable à la chaleur de préférence une mousse de polyoléfine, d'une épaisseur de couche expansée de 0,5 à 10 mm, de préférence 1,5 à 5 mm, avant qu'elle ne soit moulée en trois dimensions dans le moule d'emboutissage négatif et que la surface supérieure de la feuille ne soit grainée et/ou texturée en surface, la couche de mousse étant éventuellement supportée par un support ou une couche de support et le support étant de préférence prémoulé, disposé en position précise et relié à la mousse et/ou la bande de matières plastiques moulée, et/ou en ce que la feuille de matières plastiques est revêtue au dos, après le moulage en trois dimensions, le grainage et/ou la texturation superficielle dans l'outil, après ou pendant le refroidissement, dans le moule lui-même ou dans une phase de travail séparée et/ou dans un autre moule, d'une mousse molle à mi-dure, de préférence d'une mousse de polyuréthane, un support ou une couche de support étant éventuellement inséré(e) en plus lors de la formation de cette mousse.

7. Procédé selon une ou plusieurs des revendications 1 à 6, caractérisé en ce que, au cours du thermoformage, de la texturation et/ou du grainage, successivement ou simultanément, un agent de traitement est appliqué à la bande de matières plastiques par le verso (qui n'est pas en contact ou en liaison avec le moule d'emboutissage négatif) de la bande de matières plastiques.

8. Procédé selon la revendication 7, caractérisé en ce que l'on utilise comme agent de traitement un liquide de refroidissement ou un gaz froid qui refroidit ou trempe la bande de matières plastiques qui se trouve dans le moule d'emboutissage négatif à la température de démoulage ou au voisinage de la température de démoulage.

9. Procédé selon les revendications 7 et 8, caractérisé en ce que l'on utilise comme agent de traitement un agent adhésif, de préférence un liquide adhésif ou un liquide contenant un agent adhésif, une colle, une couche plastique à appliquer par pulvérisation et/ou une couche d'arrêt.

10. Procédé selon les revendications 8 et 9, caractérisé en ce que l'agent de traitement liquide est appliqué au verso de la bande en matière plastique thermoformée se trouvant dans le moule d'emboutissage négatif par pulvérisation, injection et/ou projection et que l'agent de traitement non absorbé par la bande plastique est récupéré et réutilisé, de préférence recyclé.

11. Procédé selon une ou plusieurs des revendications 7 à 10, caractérisé en ce que la température du liquide de traitement se situe entre 15 et 75 °C.

12. Procédé selon une ou plusieurs des revendications 1 à 11, caractérisé en ce qu'on moule par le procédé d'emboutissage négatif des feuilles de matières plastiques, des bandes contenant des matières plastiques ou des plaques de matières plastiques qui sont constituées d'une matière plastique, d'un mélange de matières plastiques ou d'un alliage de matières plastiques et, sur base de 100 parties en poids de la matière plastique, du mélange de matières plastiques ou de l'alliage de matières plastiques, de 0,01 à 15 parties en poids, de préférence 0,1 à 6 parties en poids, d'agents de traitement auxiliaires et éventuellement de charges, de pigments de couleur, de colorants ou d'autres substances auxiliaires ou qui contiennent ceux-ci et/ou on moule par le procédé d'emboutissage négatif des feuilles de matières plastiques, des bandes contenant des matières plastiques ou des plaques de matières plastiques pauvres en émission, la teneur totale des composants volatils à la température de moulage et pour le temps de moulage étant inférieure à 2 % en poids.

13. Procédé selon la revendication 12, caractérisé en ce que la matière plastique, le mélange de matières plastiques ou l'alliage de matières plastiques des feuilles de matières plastiques, bandes contenant des matières plastiques ou plaques de matières plastiques pauvres en émission est constitué(e) d'homo- ou de copolymères de chlorure de vinyle (de préférence en combinaison avec une matière thermoplastique plastifiante et/ou modifiée par un élastomère), d'un homo- et/ou d'un copolymère d'oléfines, de polyéthylène chloré, de copolymère d'éthylène et de propylène (EPM), de polymère d'éthylène, de propylène et de diène (EPDM), de polyester thermoplastique, de polyuréthane thermoplastique, d'uréthane de polyester de type caoutchouc et/ou de fluorure de polyvinylidène, ou contient une de ces matières plastiques à titre de composant, et/ou en ce que la matière plastique, le mélange de matières plastiques ou l'alliage de matières plastiques est constitué(e) d'homo- ou de copolymère de chlorure de vinyle et d'un agent de modification, de préférence une matière thermoplastique plastifiante et/ou modifiée par un élastomère, d'un copolymère d'éthylène et d'acétate de vinyle, de préférence avec une teneur en acétate supérieure à 60 % en poids, d'un terpolymère d'éthylène, d'acétate de vinyle et de monoxyde de carbone (Elvaloy), d'un caoutchouc thermoplastique, de préférence un copolymère d'éthylène et de propylène (EPM), et/ou un terpolymère d'éthylène, de propylène et de diène (EPDM), d'un caoutchouc à base de polymère de styrène ou de polymères blocs de styrène, de polyéthylène chloré, d'un polyuréthane thermoplastique, d'une résine de polyester thermoplastique, d'un élastomère d'oléfines, d'homopolymères, de copolymères et de polymères greffés d'acrylate et/ou de méthacrylate, de caoutchouc de nitrile, d'un polymère de méthylbutadiène et de styrène (MBS) ainsi que, éventuellement, d'autres agents de modification, de préférence un copolymère de styrène et d'acrylonitrile (SAN), une résine d'acrylonitrile et de butadiène (NB), un copolymère d'acrylonitrile et de butadiène (ABS), l'ASA l'AEN, l'ABS + MABS (terpolymère de butadiène, de styrène et d'acide maléique), et/ou des esters d'acides carboxyliques aliphatiques ou aromatiques, de préférence, un ester d'acide triméllitique, des adipates ou des esters mixtes de ces substances ou contient un ou plusieurs de ces composés.

14. Procédé selon une ou plusieurs des revendications 1 à 13, caractérisé en ce que la feuille de matière plastique ou la bande de matière plastique ou la plaque de matière plastique, en provenance de l'extrudeuse ou d'un dispositif de plastification analogue, est amenée ou maintenue à une température comprise dans la plage thermoplastique en tirant profit de la capacité thermique déjà disponible et éventuellement par chauffage supplémentaire, et/ou en ce que le démoulage se fait par emploi seul ou conjoint d'une pression de soufflage ou de gaz, ce qui permet de faciliter le démoulage, en particulier dans des zones critiques (contre-dépouilles).

15. Procédé selon une ou plusieurs des revendications 1 à 14, caractérisé en ce qu'on utilise comme feuille plastique un stratifié de matières plastiques, dans lequel une couche est pourvue d'un agent gonflant ou d'un mélange d'agents gonflants, qui forme une mousse ou commence à former une mousse lors de l'opération de chauffage, lors de l'opération de moulage et/ou lors de l'opération de grainage, la couche de mousse ainsi formée servant de couche décorative et/ou de couche grainée ou encore de couche de rembourrage au verso de la feuille texturée et/ou grainée.

16. Emploi du procédé selon une ou plusieurs des revendications 1 à 15 pour des recouvrements de sécurité, des parois latérales, des parties avant et arrière, des tableaux de bord (des tableaux d'instruments) et des montants latéraux de véhicules automobiles et avions.

17. Dispositif permettant de fabriquer des pièces moulées ou des objets à partir des feuilles de matières plastiques thermoformables, des bandes contenant des matières plastiques thermoformables ou des plaques de matières plastiques selon le procédé d'emboutissage, constitué d'un moule d'emboutissage poreux auquel est affecté comme contre-outil un moule mâle ou un dispositif analogue, dispositif dans lequel le moule d'emboutissage négatif est équipé d'au moins une conduite et/ou d'un dispositifpermettant d'appliquer une différence de pression, le dispositif d'emboutissage négatif est doté d'un châssis de tension ou d'étanchéité pour tendre les feuilles de matières plastiques thermoformables, les bandes contenant des matières plastiques thermoformables ou les plaques de plastiques et d'un système de refroidissement ou d'une conduite d'agent réfrigérant, caractérisé en ce que le moule d'emboutissage négatif présente en négatif la forme d'une pièce moulée d'automobile, d'une pièce moulée d'avion, d'une partie ou d'un objet destiné(e) à une voiture ou un avion, en ce que la surface de moulage microporeuse est perméable à l'air, présente de fines textures superficielles pour produire un grain et, éventuellement, des décorations et porte une couche ou une surface contenant un alliage métallique, des microparticules métalliques, des particules métallo-céramiques et/ou des microparticules métallo-céramiques et/ou contenant des charges de très fine granulométrie, avec une épaisseur de particules moyenne inférieure à 60 µm, en ce que le moule mâle ou le dispositif analogue présente la forme ou la forme partielle du moule d'emboutissage négatif (sous forme positive), et le moule d'emboutissage négatif est combiné à un dispositif d'alimentation et/ou d'évacuation de la feuille, la bande ou la plaque de matière plastique ou à un dispositif de transport pour la pièce ou l'objet moulé(e) produit(e).

18. Dispositif selon la revendication 17, caractérisé en ce que le moule d'emboutissage négatif contient comme surface de moulage au moins une couche superficielle qui est constituée d'un agent liant, d'une charge minérale de fine granulométrie ne conduisant pas ou conduisant peu la chaleur, de préférence une poudre céramique, avec une granulométrie moyenne inférieure à 50 µm, ainsi que d'une poudre de fine granulométrie, métallique, d'alliage métallique, contenant des microparticules métalliques ou des particules métallo-céramiques ou encore d'un mélange pulvérulent ayant un calibre particulaire moyen inférieur à 60 µm, ou contient celles-ci.

19. Dispositif selon les revendications 17 et 18, caractérisé en ce que le rapport pondéral de la charge à la poudre métallique, la poudre d'alliage métallique, la poudre contenant des particules métallo-céramiques ou des microparticules métalliques de fine granulométrie s'élève à 12 : 1 à 1 : 12, de préférence 5 : 1 à 1 : 5 et/ou en ce que la couche superficielle contient en outre des fibres de matière minérale, de préférence des fibres de verre.

20. Dispositif selon une ou plusieurs des revendications 17 à 19, caractérisé en ce que le rapport granulométrique moyen de la charge à la poudre métallique de fine granulométrie est de 3 : 1 à 1 : 10, de préférence de 1 : 1 à 1 : 3.

21. Dispositif selon une ou plusieurs des revendications 17 à 20, caractérisé en ce que le moule d'emboutissage négatif et le moule mâle sont agencés dans une chambre de moulage qui peut être soumise à une dépression ou à une surpression.

22. Dispositif selon une ou plusieurs des revendications 17 à 21, caractérisé en ce que des buses de pulvérisation du liquide de traitement sont agencées à distance du moule d'emboutissage négatif, de préférence de façon mobile.

23. Dispositif selon une ou plusieurs des revendications 17 à 22, caractérisé en ce qu'une cuve réceptrice ou un bassin récepteur pour le liquide de traitement pulvérisé est affecté au dispositif, cette cuve ou ce bassin étant agencé(e) de préférence en dessous du moule d'emboutissage négatif et/ou en dessous des buses de pulvérisation.
